# EUROPEAN PATENT APPLICATION

(11) **EP 4 645 986 A1**
(43) Date of publication of application: **05.11.2025**
(21) Application number: 23911681.7
(22) Date of filing: 12.12.2023
(51) Int. Cl.: H04W 72/0457, H04W 72/0446, H04W 84/12

(54) **WIRELESS COMMUNICATION DEVICE AND WIRELESS COMMUNICATION METHOD**

(30) Priority: 26.12.2022 JP 2022208852
(71) Applicant: Sony Group Corporation, Tokyo 108-0075 (JP)
(72) Inventor: SUGAYA, Shigeru, Tokyo 108-0075 (JP); HIRATA, Ryuichi, Tokyo 108-0075 (JP)
(74) Representative: D Young & Co LLP
(86) International application number: PCT/JP2023/044357
(87) International publication number: WO 2024/142900

(57) **Abstract**

The present disclosure relates to a wireless communication device and a wireless communication method capable of improving utilization efficiency of a transmission path.

Provided is a wireless communication device including a control unit that performs control: to generate first data and second data by dividing transmission data on the basis of a use status of a first link included in a plurality of links set with another wireless communication device; and to transmit a data frame including the first data or the second data by using the first link or a second link different from the first link. The present disclosure can be applied to, for example, a wireless communication device configuring a wireless LAN system.

## Description

### TECHNICAL FIELD

The present disclosure relates to a wireless communication device and a wireless communication method, and more particularly, to a wireless communication device and a wireless communication method capable of improving utilization efficiency of a transmission path.

### BACKGROUND ART

In a conventional wireless local area network (LAN) system, a technique of transmitting and receiving data of a large information amount in a small transmission unit by performing fragment processing of fragmenting a MAC layer service data unit (MSDU) with a certain information length has been used.

Patent Document 1 discloses a technique in which an MSDU is configured as an aggregated A-MSDU (Aggregate MSDU), fragmented by a predetermined length, and further fragmented data is regarded as a MAC layer protocol data unit (MPDU) to configure an A-MPDU (Aggregate MPDU).

Furthermore, currently, a technology for performing high-speed and large-capacity data transmission in a short time by simultaneously using a plurality of frequency bands (links) by a multi-link operation has been put into practical use.

### CITATION LIST

### PATENT DOCUMENT

Patent Document 1: Japanese Patent Application Laid-Open No. 2010-011052

### SUMMARY OF THE INVENTION

### PROBLEMS TO BE SOLVED BY THE INVENTION

In the multi-link operation, since transmission is performed while reception is performed on a plurality of links at the same time, there is a possibility that it becomes difficult to correctly decode data that has been received so far due to interference of the transmitted data. Therefore, in a case where the fragment processing is performed in the multi-link operation, it is necessary to efficiently transmit data by a plurality of links, and it is required to improve utilization efficiency of a transmission path.

The present disclosure has been made in view of such a situation, and is capable of improving utilization efficiency of a transmission path.

### SOLUTIONS TO PROBLEMS

A wireless communication device of one aspect of the present disclosure is a wireless communication device including a control unit that performs control: to generate first data and second data by dividing transmission data on the basis of a use status of a first link included in a plurality of links set with another wireless communication device; and to transmit a data frame including the first data or the second data by using the first link or a second link different from the first link.

A wireless communication method according to one aspect of the present disclosure is a wireless communication method performed by a wireless communication device, the wireless communication method including: generating first data and second data by dividing transmission data on the basis of a use status of a first link included in a plurality of links set with another wireless communication device; and transmitting a data frame including the first data or the second data by using the first link or a second link different from the first link.

In a wireless communication device and a wireless communication method of one aspect of the present disclosure, first data and second data are generated by dividing transmission data on the basis of a use status of a first link included in a plurality of links set with another wireless communication device; and a data frame including the first data or the second data is transmitted by using the first link or a second link different from the first link.

A wireless communication device according to one aspect of the present disclosure is a wireless communication device including a control unit that perform control: to receive, by using a first link included in a plurality of links set with another wireless communication device or a second link different from the first link, a data frame including first data or second data generated by dividing transmission data on the basis of a use status of the first link, the data frame being transmitted from the another wireless communication device; and to restore the transmission data from the first data and the second data obtained from the data frame and construct the restored transmission data as reception data.

A wireless communication method according to one aspect of the present disclosure is a wireless communication method performed by a wireless communication device, the wireless communication method including: receiving, by using a first link included in a plurality of links set with another wireless communication device or a second link different from the first link, a data frame including first data or second data generated by dividing transmission data on the basis of a use status of the first link, the data frame being transmitted from the another wireless communication device; and restoring the transmission data from the first data and the second data obtained from the data frame and construct the restored transmission data as reception data.

In a wireless communication device and a wireless communication method according to one aspect of the present disclosure, by using a first link included in a plurality of links set with another wireless communication device or a second link different from the first link, a data frame including first data or second data generated by dividing transmission data on the basis of a use status of the first link is received, the data frame being transmitted from the another wireless communication device, and the transmission data is restored from the first data and the second data obtained from the data frame and the restored transmission data is constructed as reception data.

Note that the wireless communication device according to one aspect of the present disclosure may be an independent device or an internal block configuring one device.

### BRIEF DESCRIPTION OF DRAWINGS

Fig. 1 is a diagram illustrating a configuration example of a wireless LAN system to which the present disclosure is applied.
Fig. 2 is a diagram illustrating a configuration example of a frequency band in which a wireless communication device to which the present disclosure is applied can operate in a multi-link operation.
Fig. 3 is a block diagram illustrating a configuration example of the wireless communication device to which the present disclosure is applied.
Fig. 4 is a block diagram illustrating a configuration example of a wireless communication module in Fig. 3.
Fig. 5 is a diagram illustrating a first example of data transmitted from a transmission-side communication device.
Fig. 6 is a diagram illustrating a first example of a configuration in which the data in Fig. 5 is transmitted by distributing the data over a plurality of links.
Fig. 7 is a diagram illustrating another example of a configuration in which the data in Fig. 5 is transmitted by distributing the data over a plurality of links.
Fig. 8 is a diagram illustrating another example of a configuration in which the data in Fig. 5 is transmitted by distributing the data over a plurality of links.
Fig. 9 is a diagram illustrating a second example of a configuration in which the data in Fig. 5 is transmitted by distributing the data over a plurality of links.
Fig. 10 is a diagram illustrating another example of a configuration in which the data in Fig. 5 is transmitted by distributing the data over a plurality of links.
Fig. 11 is a diagram illustrating another example of a configuration in which the data in Fig. 5 is transmitted by distributing the data over a plurality of links.
Fig. 12 is a diagram illustrating a third example of a configuration in which the data in Fig. 5 is transmitted by distributing the data over a plurality of links.
Fig. 13 is a diagram illustrating a fourth example of a configuration in which the data in Fig. 5 is transmitted by distributing the data over a plurality of links.
Fig. 14 is a diagram illustrating a second example of data transmitted from the transmission-side communication device.
Fig. 15 is a diagram illustrating a first example of a configuration in which the data in Fig. 14 is transmitted by distributing the data over a plurality of links.
Fig. 16 is a diagram illustrating a second example of a configuration in which the data in Fig. 14 is transmitted by distributing the data over a plurality of links.
Fig. 17 is a diagram illustrating a third example of data transmitted from the transmission-side communication device.
Fig. 18 is a diagram illustrating a configuration example in which the data in Fig. 17 is transmitted by distributing the data over a plurality of links.
Fig. 19 is a diagram illustrating a fourth example of data transmitted from the transmission-side communication device.
Fig. 20 is a diagram illustrating a configuration example in which the data in Fig. 19 is transmitted by distributing the data over a plurality of links.
Fig. 21 is a diagram illustrating a configuration example of a communication sequence between the wireless communication devices to which the present disclosure is applied.
Fig. 22 is a diagram illustrating a configuration example of a fragment request of the multi-link operation.
Fig. 23 is a diagram illustrating a configuration example of a fragment response of the multi-link operation.
Fig. 24 is a diagram illustrating an example of data transmitted from the transmission-side communication device.
Fig. 25 is a diagram illustrating an example of data on which a fragment is performed and data on which fragment is not performed.
Fig. 26 is a diagram illustrating a first example of a configuration of MPDU data.
Fig. 27 is a diagram illustrating a first example of a configuration of an A-MPDU frame.
Fig. 28 is a diagram illustrating a first example of a configuration of an A-MPDU frame to which a PLCP header is added.
Fig. 29 is a diagram illustrating a second example of a configuration of the MPDU data.
Fig. 30 is a diagram illustrating a second example of a configuration of the A-MPDU frame.
Fig. 31 is a diagram illustrating a second example of a configuration of the A-MPDU frame to which a PLCP header is added.
Fig. 32 is a diagram illustrating a configuration example of a MAC header.
Fig. 33 is a diagram illustrating a first example of a configuration of a Frame Control subfield.
Fig. 34 is a diagram illustrating a second example of a configuration of the Frame Control subfield.
Fig. 35 is a diagram illustrating a configuration example of a Sequence Control subfield.
Fig. 36 is a diagram illustrating a configuration example of a delimiter.
Fig. 37 is a diagram illustrating a structure of signal processing in a device in a wireless LAN system of the conventional method.
Fig. 38 is a diagram illustrating a structure of signal processing in a device in a wireless LAN system of the present disclosure.
Fig. 39 is a flowchart illustrating a flow of a transmission-side processing.
Fig. 40 is a flowchart illustrating MLO fragment processing in detail.
Fig. 41 is a flowchart illustrating a flow of a transmission-side confirmation processing.
Fig. 42 is a flowchart illustrating a flow of a reception-side confirmation processing.
Fig. 43 is a block diagram illustrating a configuration example of a computer.
Fig. 44 is a block diagram illustrating a schematic configuration example of a smartphone to which the present technology is applied.
Fig. 45 is a block diagram illustrating a schematic configuration example of an in-vehicle device to which the present technology is applied.
Fig. 46 is a block diagram illustrating a schematic configuration example of a wireless AP to which the present technology is applied.

### MODE FOR CARRYING OUT THE INVENTION

### <System Configuration>

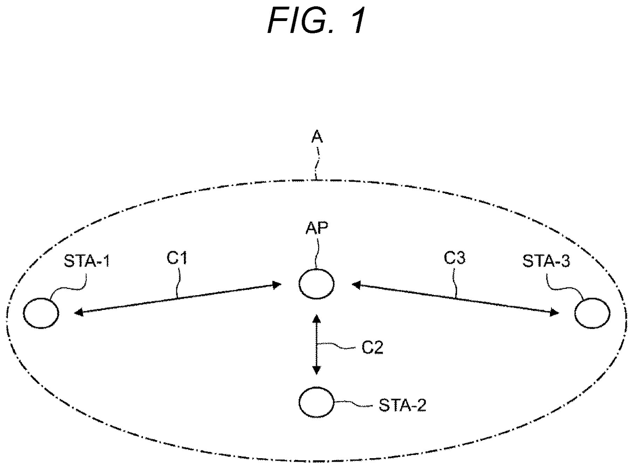

Fig. 1 is a diagram illustrating a configuration example of a wireless LAN system to which the present disclosure is applied.

Fig. 1 schematically illustrates a state in which the wireless LAN system includes an access point AP and communication terminals STA-1 to STA-3 connected to the access point AP, and is configured as one basic service set (BSS: Basic Service Set).

A radio wave coverage of the access point AP is indicated by an ellipse A of a one-dot chain line, and a configuration in which a network is formed including the communication terminal STA present in the radio wave coverage is illustrated. That is, in the basic service set, as indicated by arrows C1 to C3, the communication terminals STA-1 to STA-3 connected to the access point AP are each configured to perform wireless communication with the access point AP. The access point AP and the communication terminal STA are an example of a wireless communication device to which the present disclosure is applied.

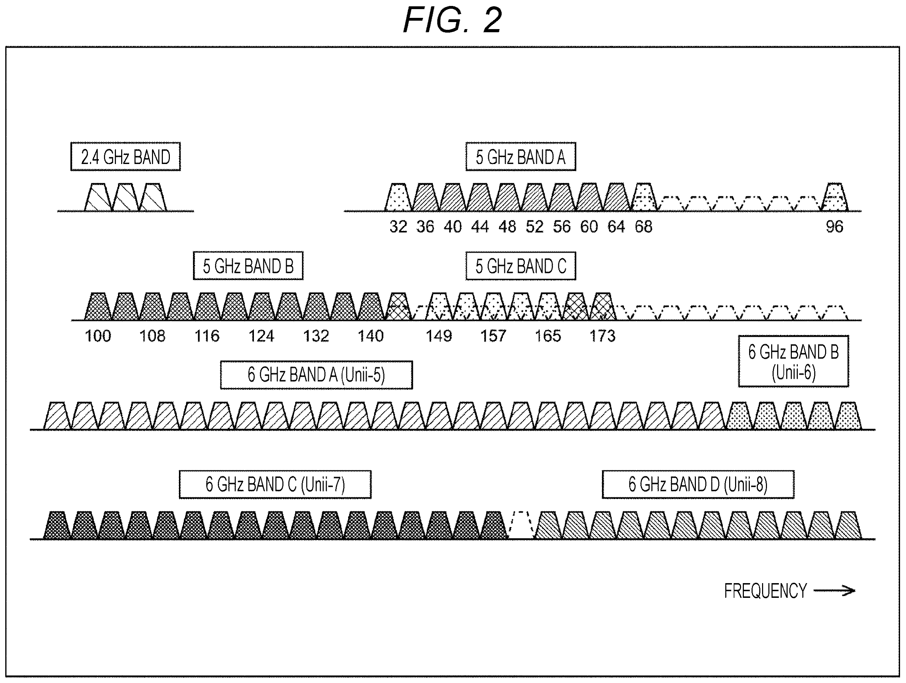

Fig. 2 is a diagram illustrating a configuration example of a frequency band in which a wireless communication device to which the present disclosure is applied can operate in a multi-link operation (MLO: Multi-Link Operation).

In Fig. 2, for example, a 2.4 GHz band, a 5 GHz band, and a 6 GHz band are prepared in order to make the wireless communication device operable in the multi-link operation using a plurality of frequency bands. Specifically, the bandwidth of 20 MHz of orthogonal frequency division multiplexing (OFDM) is represented by a trapezoid as one channel, and at least three channels of 20 MHz are arranged in the 2.4 GHz band.

Furthermore, the 5 GHz band includes a 5 GHz band A, a 5 GHz band B, and a 5 GHz band C. In the 5 GHz band A, 10 channels of 20 MHz are arranged, and the trapezoidal pattern indicates that the number of channels used may be eight according to the legal regulations of the country. In the 5 GHz band B, 13 channels of 20 MHz are arranged, and the trapezoidal pattern indicates that the number of channels used may be 11 according to the legal regulations of the country. In the 5 GHz band C, the trapezoidal pattern indicates that seven channels of 20 MHz are similarly arranged.

Then, the 6 GHz band to be used in recent years includes 6 GHz band A (Unii-5 band), 6 GHz band B (Unii-6 band), 6 GHz band C (Unii-7 band), and 6 GHz band D (Unii-8 band). 24 channels of 20 MHz are prepared in the 6 GHz band A (Unii-5 band), 5 channels of 20 MHz are prepared in the 6 GHz band B (Unii-6 band), 17 channels of 20 MHz are prepared in the 6 GHz band C (Unii-7 band), and 11 channels of 20 MHz are prepared in the 6 GHz band D (Unii-8 band).

Note that, in a case where the bandwidth is wide, the multi-link operation may be each performed as a plurality of bands according to a difference in frequency even within the band.

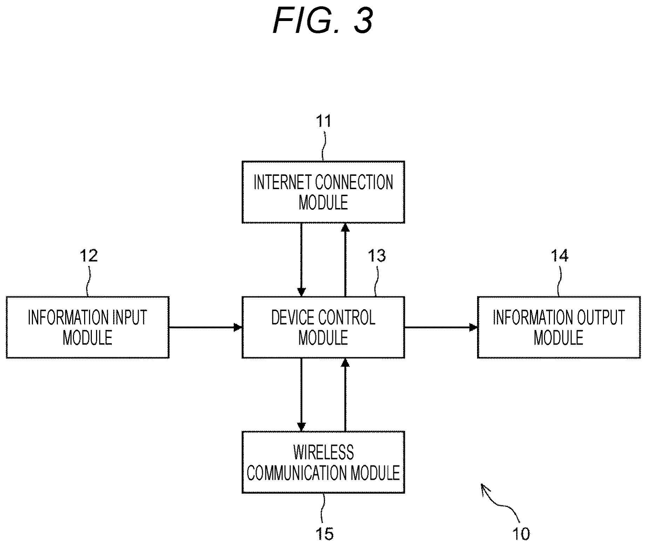

Fig. 3 is a block diagram illustrating a configuration example of a wireless communication device to which the present disclosure is applied. In Fig. 3, a wireless communication device 10 is configured as the access point AP or the communication terminal STA in the wireless LAN system in Fig. 1. Hereinafter, in the wireless communication device 10, a side transmitting data frame is also referred to as a transmission-side communication device 10Tx, and a side receiving data frame is also referred to as a reception-side communication device 10Rx.

In Fig. 3, the wireless communication device 10 includes an Internet connection module 11, an information input module 12, a device control module 13, an information output module 14, and a wireless communication module 15.

The Internet connection module 11 performs various processing related to the Internet connection, under the control of the device control module 13. For example, in a case of operating as an access point AP, the Internet connection module 11 has a configuration in which a function such as a communication modem for connecting to an Internet network is implemented, and has a configuration in which the Internet connection is performed through a public communication line and an Internet service provider.

The information input module 12 has a function of inputting instruction information corresponding to an instruction from the user, to the device control module 13. The information input module 12 includes, for example, an input device such as a push button, a keyboard, or a touch panel.

The device control module 13 controls each unit (module) to cause the wireless communication device 10 to operate as an access point AP or a communication terminal STA. The device control module 13 includes a microprocessor, a microcontroller, a semiconductor memory, and the like, for example.

The information output module 14 has a function of displaying information necessary to the user, on the basis of the information supplied from the device control module 13. Here, the information displayed and informed by the information output module 14 includes, for example, an operation state of the wireless communication device 10, information obtained through the Internet network, and the like. The information output module 14 includes, for example, a display element such as a liquid crystal display, an organic EL display, or a light emitting diode (LED) display, or an output device including a speaker or the like that outputs sound or music.

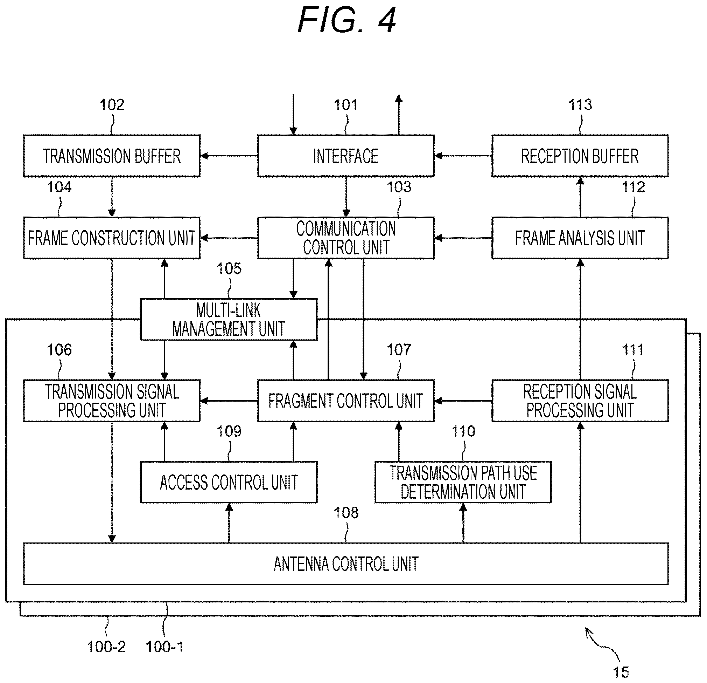

The wireless communication module 15 performs various processing related to wireless communication, under the control of the device control module 13. The wireless communication module 15 includes a wireless communication chip, a peripheral circuit, a microcontroller, a semiconductor memory, and the like, for example. The configuration of the wireless communication module 15 will be described later in detail, with reference to Fig. 4.

Note that, in the wireless communication device 10, the device control module 13 and the wireless communication module 15 are essential components, but whether or not the Internet connection module 11, the information input module 12, and the information output module 14 excluding the device control module 13 and the wireless communication module 15 are included in the components is optional. That is, each wireless communication device 10 operating as the access point AP or the communication terminal STA can be configured with only necessary modules, and unnecessary portions may be simplified or not incorporated. For example, in the wireless communication module 15 in Fig. 3, the Internet connection module 11 may be incorporated only in the access point AP, and the information input module 12 and the information output module 14 may be incorporated only in the communication terminal STA. In the wireless communication module 15, whether or not to include an antenna is optional.

Fig. 4 is a block diagram illustrating a configuration example of the wireless communication module 15 in Fig. 3.

The wireless communication module 15 includes an interface 101 that is connected to another module and exchanges various types of information and data, a transmission buffer 102 that stores data to be transmitted, a communication control unit 103 that manages a series of control according to the present disclosure, and a frame construction unit 104 that constructs a frame used for parameter setting, detection notification, and the like.

The wireless communication module 15 is provided with a multi-link management unit 105 that manages radio links (Radio Link) required in the multi-link operation of the present disclosure, and the following multi-link blocks 100 may be configured according to the number of links available in the multi-link operation. Fig. 4 exemplifies a case where a multi-link block 100-1 and a multi-link block 100-2 corresponding to two links of a link 1 (Link 1) and a link 2 (Link 2) are provided.

The multi-link block 100-1 includes a transmission signal processing unit 106 that performs encoding processing of data to be transmitted, a fragment control unit 107 that controls a fragment (Dynamic Fragment) operation of the present disclosure, and an antenna control unit 108 that transmits a transmission signal from the transmission signal processing unit 106 as a wireless signal via an antenna (not illustrated). Furthermore, the antenna control unit 108 outputs a wireless signal received via the antenna as a reception signal.

Moreover, the multi-link block 100-1 includes an access control unit 109 for independently performing access control in each link (in this example, the link 1 (Link 1)), a transmission path use determination unit 110 that measures received electric field strength of a signal detected from the surroundings and determines use of a transmission path, and a reception signal processing unit 111 that extracts information configured as a frame from a received signal from the antenna control unit 108.

Similarly to the multi-link block 100-1, the multi-link block 100-2 includes the transmission signal processing unit 106, the fragment control unit 107, the antenna control unit 108, the access control unit 109, the transmission path use determination unit 110, and the reception signal processing unit 111. In the multi-link block 100-2, the access control unit 109 performs access control independently in the link 2 (Link 2). Note that, although not illustrated, in a case where three or more links (link 3 (Link 3) and the like) are used, a multi-link block 100-3 and the like may be further provided according to the number of links.

The wireless communication module 15 includes a frame analysis unit 112 that extracts, for data fragmented by the fragment operation of the present disclosure, information included as data in individual frames extracted by the reception signal processing unit 111 of the multi-link block 100 corresponding to each link, and a reception buffer 113 that temporarily stores received data.

Note that, in the configuration illustrated in Fig. 4, an arrow between each block represents a flow and control of data (signal), and each block operates in cooperation with another block connected by the arrow in order to implement its own function.

That is, for example, in order to realize the function related to the multi-link operation of the present disclosure, the multi-link management unit 105 operates in cooperation with each of the frame construction unit 104 and (the fragment control unit 107 and the like of) the multi-link block 100 corresponding to each link under the control of the communication control unit 103. Furthermore, in order to realize the function related to the fragment operation of the present disclosure, the fragment control unit 107 operates in cooperation with each of the multi-link management unit 105, the transmission signal processing unit 106, the access control unit 109, the transmission path use determination unit 110, and the reception signal processing unit 111 under the control of the communication control unit 103.

### <Operation of the Present Disclosure>

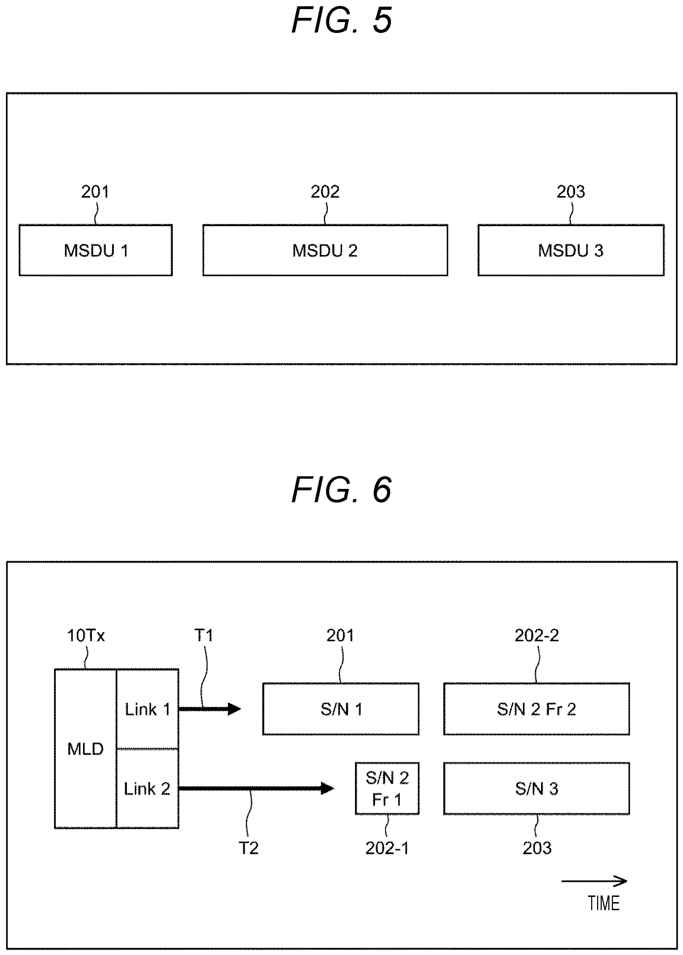

Fragment processing (hereinafter, also referred to as an MLO fragment) by the multi-link operation in the transmission-side communication device 10Tx will be described with reference to Figs. 5 to 20. The fragment of the present disclosure means that transmission data that is variable-length data such as a MAC layer service data unit (MSDU) is divided into any information lengths. Data generated by dividing the transmission data is fragmented data (fragment data). The transmission data is data scheduled to be transmitted by the transmission-side communication device 10Tx.

### <<First Example>>

Fig. 5 illustrates a first example in a case where a plurality of MSDUs having different information lengths are present as the transmission data transmitted from the transmission-side communication device 10Tx. In Fig. 5, data of three MSDUs, that is, data 201 that is the MSDU 1, data 202 that is the MSDU 2, and data 203 that is the MSDU 3 are each configured as variable-length data. That is, in a case where fragmenting is not performed, for example, the MSDU 1 may be sent as sequence number 1, the MSDU 2 may be sent as sequence number 2, and the MSDU 3 may be sent as sequence number 3.

Hereinafter, Figs. 6 to 13 exemplify a configuration in a case where the data 201 to 203 illustrated in Fig. 5 are transmitted. Furthermore, Figs. 6 to 13 exemplify a configuration in a case where transmission is performed using at least two links (a link 1 (Link 1) and a link 2 (Link 2)), as an example of a plurality of frequency bands (links) in the multi-link operation.

Fig. 6 is a diagram illustrating a first example of a configuration in which the data 201 to 203 in Fig. 5 is transmitted by distributing the data over two links.

Fig. 6 illustrates a configuration in a case where a transmission-side multi-link device (MLD), that is, the transmission-side communication device 10Tx, which performs the multi-link operation, transmits data via the two links, the link 1 (Link 1) and the link 2 (Link 2). A time until the transmission-side communication device 10Tx can use the transmission path according to a predetermined access control procedure is indicated by arrows T1 and T2 for each link.

That is, when the predetermined time T1 elapses, the transmission-side communication device 10Tx can perform transmission on the link 1, and the transmission of the data 201 is started. The data 201 is MSDU data with sequence number 1 *(S*/*N* 1). Thereafter, when the predetermined time T2 has elapsed and transmission on the link 2 becomes possible, the transmission-side communication device 10Tx starts transmission of data 202-1. The data 202-1 is data (S/N 2 Fr 1) obtained by fragmenting MSDU data with sequence number 2 *(S*/*N* 2). Here, in the data 202, which is the MSDU data with the sequence number 2 *(S*/*N* 2), data before expiration of the data 201 previously transmitted on the link 1 is handled as the fragment 1 (Fr 1) to be configured as the data 202-1.

Thereafter, the transmission-side communication device 10Tx transmits data 202-2 on the link 1 and transmits the data 203 on the link 2. The data 202-2 is the remaining data (S/N 2 Fr 2) obtained by fragmenting and transmitting the MSDU data with sequence number 2 *(S*/*N* 2). The data 203 is MSDU data with sequence number 3 (S/N 3). In this way, the data 201 *(S*/*N* 1) and the data 203 (S/N 3) are transmitted without being fragmented, but the data 202 (S/N 2) is fragmented and transmitted as the data 202-1 (S/N 2 Fr 1) and the data 202-2 (S/N 2 Fr 2). Note that, in the following description, data is similarly distinguished by *"S*/*N"* indicating a sequence number and "Fr" indicating a fragment.

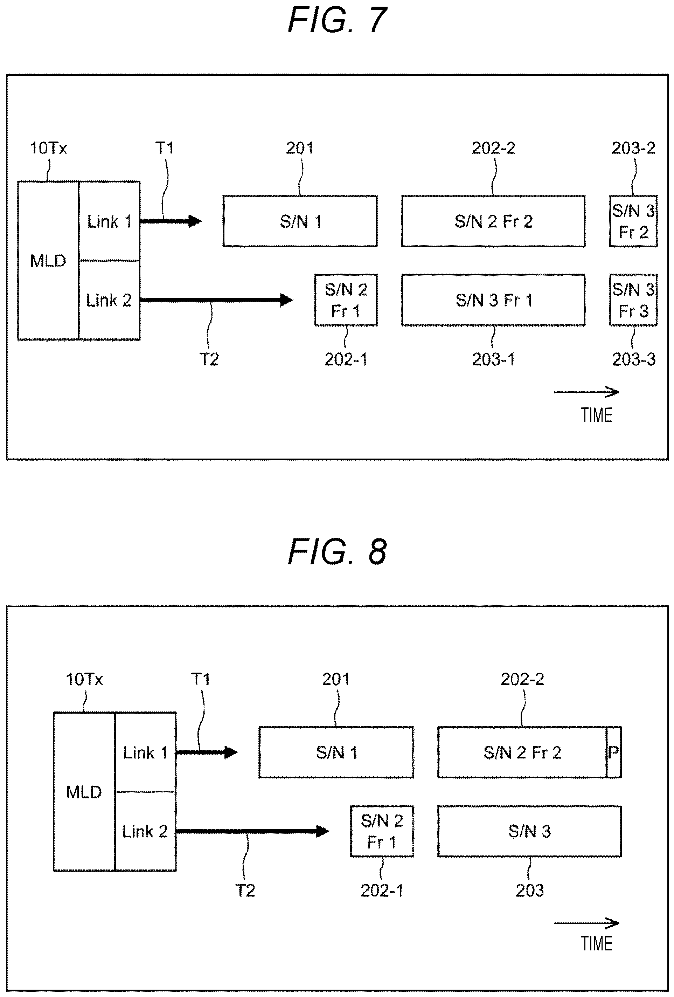

Figs. 7 and 8 are diagrams illustrating another example of the configuration in which the data 201 to 203 in Fig. 5 is transmitted by distributing the data over two links.

Here, the operation in a case where end time alignment is performed is illustrated. The transmission-side communication device 10Tx transmits the data 201 (S/N 1) on the link 1 that becomes available first, and when the link 2 becomes available during the transmission, the transmission-side communication device 10Tx transmits the data 202-1 (S/N 2 Fr 1) until the timing when the transmission of the data 201 ends.

Here, as the end time alignment, an example is illustrated in which data is transmitted at a predetermined interval for each data for convenience, but this interval may be short inter frame space (SIFS) or reduced inter frame space (RIFS), for example. Alternatively, any time interval may be provided according to a predetermined access control procedure, but if an interval is not required, transmission may be continuously performed immediately after the transmission. Moreover, once the end time alignment is performed, transmission can be started simultaneously on a plurality of links thereafter.

Fig. 7 is an example illustrating a configuration in which the end time alignment is performed after the data 201 and the data 202-1 are transmitted. In this case, since the start timings coincide with each other, the end time alignment can be performed by equally dividing the amount of information of the remaining data to be transmitted by the amount of information that can be transmitted on the available link.

Fig. 7 illustrates a configuration in which the data 202-2 is transmitted on the link 1, and data 203-1 is subjected to the end time alignment and transmitted on the link 2. The data 202-2 is the remaining data (S/N *2* Fr 2) obtained by fragmenting and transmitting the MSDU data with sequence number 2. The data 203-1 is data (S/N 3 Fr 1) obtained by fragmenting the MSDU data with sequence number 3.

Moreover, also in this case, after the end time alignment is performed, the remaining MSDU data with sequence number 3 is further equally divided and transmitted. That is, data 203-2 is transmitted on the link 1, and data 203-3 is transmitted on the link 2. The data 203-2 is one piece of data (S/N 3 Fr 2) among pieces of data obtained by equally dividing the remaining data obtained by fragmenting and transmitting the MSDU data with sequence number 3. The data 203-3 is the other data (S/N 3 Fr 3) among the equally divided data.

Fig. 8 is an example illustrating a configuration in which padding is performed for the end time alignment. For example, in a case where there is a small difference in the data transmission time for each link, or in a case where the data is within the time constituting the overhead information such as the header information even if the fragment is performed, it is not necessary to perform the fragment processing. In this case, it may be configured such that the end times coincide with each other for convenience by adding padding.

In Fig. 8, the remaining data 202-2 *(S*/*N* 2 Fr 2) obtained by fragmenting and transmitting the MSDU data with sequence number 2 is transmitted on the link 1, and the data 203 (S/N 3), which is the MSDU data with sequence number 3, is transmitted on the link 2. In order to perform the end time alignment, padding (P) is added to the data 202-2 transmitted on the link 1 and the data 202-2 is transmitted. In Fig. 8, padding (P: Padding) is denoted as "P". Note that, in the following drawings, padding is similarly denoted as "P".

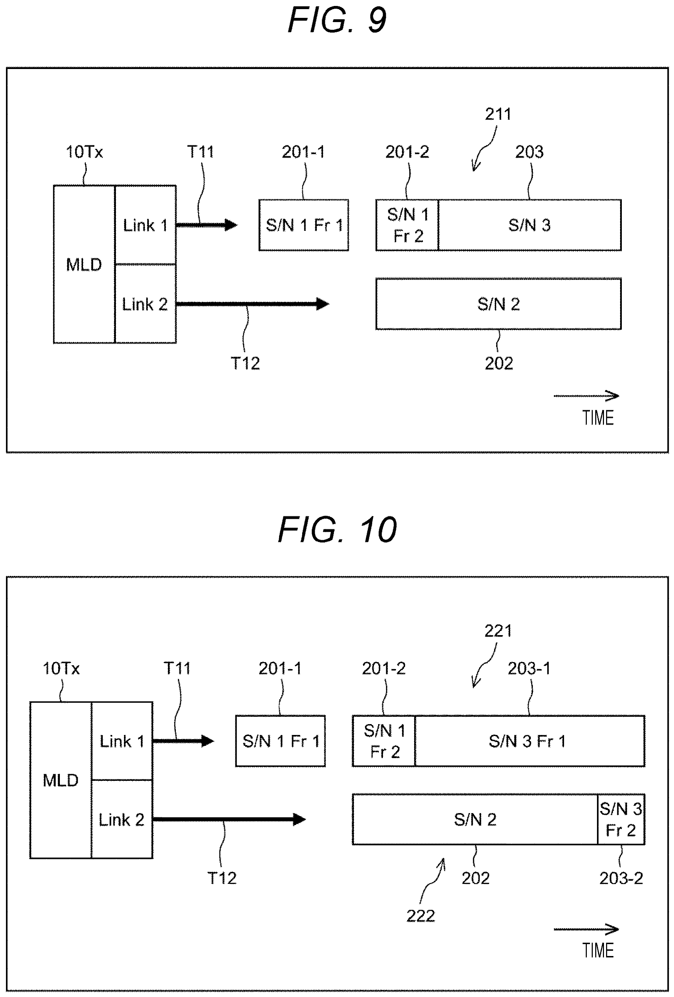

Fig. 9 is a diagram illustrating a second example of a configuration in which the data 201 to 203 in Fig. 5 is transmitted by distributing the data over two links.

In Fig. 9, in a case where the transmission-side communication device 10Tx can grasp the transmission waiting time in the link 2, which is another link, when a predetermined time T11 elapses and transmission on the link 1 becomes possible, the transmission-side communication device 10Tx starts transmission of data 201-1 (S/N 1 Fr 1) obtained by fragmenting the MSDU data with sequence number 1 until the timing corresponding to a time T12, which is the waiting time.

Thereafter, the transmission-side communication device 10Tx transmits data 211 on the link 1 and transmits the data 202 on the link 2 at a timing at which transmission also becomes possible on the link 2 after the predetermined time T12 elapses. The data 211 is an A-MPDU (Aggregation MPDU) frame obtained by aggregating the remaining data 201-2 (S/N 1 Fr 2) transmitted by fragmenting the MSDU data with sequence number 1 and the data 203 *(S*/*N* 3), which is the MSDU data with sequence number 3. The A-MPDU frame is configured by aggregating a plurality of MAC layer protocol data units (MPDUs) into one frame. The data 202 is the MSDU data with sequence number 2.

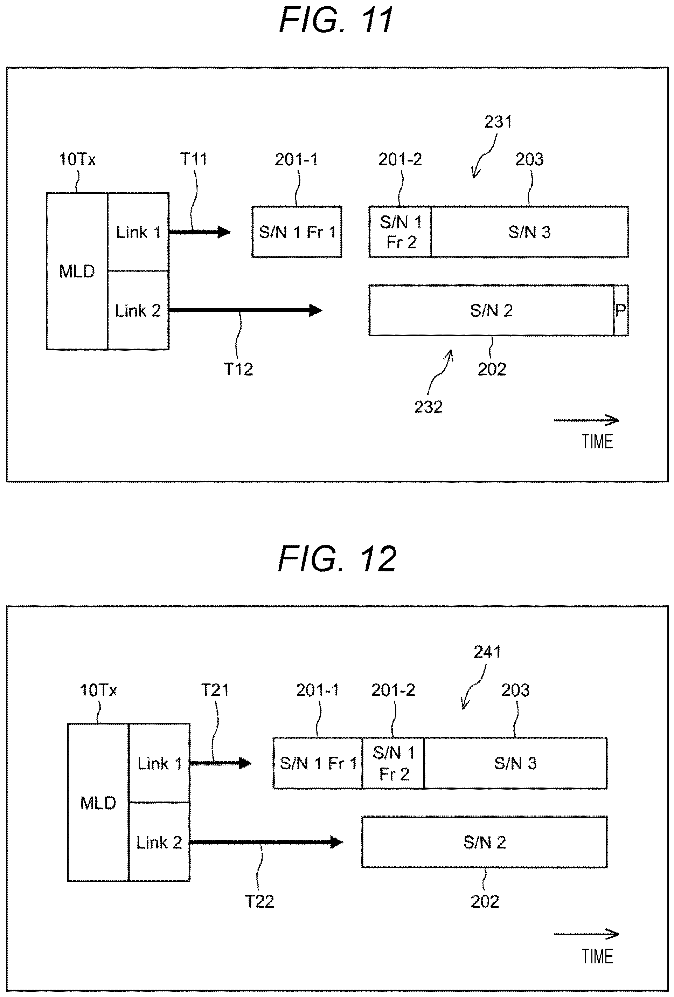

Figs. 10 and 11 are diagrams illustrating another example of the configuration in which the data 201 to 203 in Fig. 5 is transmitted by distributing the data over two links.

Here, an operation in a case where start time alignment is performed is illustrated, and an example is illustrated in which a plurality of MSDUs or fragmented MSDUs are configured as an A-MPDU frame by utilizing a frame aggregation method. That is, a configuration is illustrated in which the start time alignment coincides with each other and the transmission is performed so that the transmission can be simultaneously started in the multi-link.

The start time alignment is configured to transmit data obtained by fragmenting one MSDU until another link becomes available when one link becomes available first in the multi-link operation, thereby obtaining a method of simultaneously starting transmission when a plurality of links becomes available thereafter. For example, when only the link 1 becomes available, in a case where the timing at which the link 2 becomes available is grasped, the fragment is performed to use only the link 1.

In order to grasp the timing at which another link becomes available, a case is assumed in which the transmission-side communication device 10Tx communicates with another wireless communication device on the link, or a network allocation vector (NAV) is set by request to send (RTS), clear to send (CTS), a trigger frame, or the like transmitted from another wireless communication device. However, the available timing may be grasped using other methods.

That is, in a case where the timing at which another link becomes available can be grasped, data to be transmitted on the available link (link 1) in the time until the timing arrives is fragmented and transmitted. In Figs. 10 and 11, the transmission-side communication device 10Tx transmits data the 201-1 *(S*/*N* 1 Fr 1) obtained by fragmenting the MSDU data with sequence number 1 on the link 1 that has become available first, with respect to the amount of data corresponding to the time until the timing at which the data becomes available on another link 2 in advance.

Fig. 10 illustrates a first example of the operation of the start time alignment. In Fig. 10, when the link 2 also becomes available, the start time alignment is performed to transmit data on the link 1 and the link 2, and the remaining data may be distributed according to the number of links to configure the A-MPDU frame.

Fig. 10 illustrates a configuration in which the end time alignment is also performed, and the transmission-side communication device 10Tx transmits data 221 on the link 1 and transmits data 222 on the link 2. The data 221 is an A-MPDU frame obtained by aggregating the remaining data 201-2 (S/N 1 Fr 2) obtained by fragmenting the MSDU data with sequence number 1 and the data 203-1 (S/N 3 Fr 1) obtained by fragmenting the MSDU data with sequence number 3. The data 222 is an A-MPDU frame obtained by aggregating the data 202 (S/N 2), which is the MSDU data with sequence number 2, and the remaining data 203-2 (S/N 3 Fr 2) transmitted by fragmenting the MSDU data with sequence number 3.

Fig. 11 illustrates a second example of the operation of the start time alignment. In Fig. 11, when the link 2 also becomes available, the start time alignment is performed, and data is transmitted on the link 1 and the link 2.

Fig. 11 illustrates an example in which, in a case where the end time alignment is performed together, if the fragment is not further performed, the end time alignment is performed by adding padding (P) as necessary.

In Fig. 11, the transmission-side communication device 10Tx transmits data 231 on the link 1 and transmits data 232 on the link 2. The data 231 is an A-MPDU frame obtained by aggregating the remaining data 201-2 (S/N 1 Fr 2) obtained by fragmenting the MSDU data with sequence number 1 and the data 203 (S/N 3), which is the MSDU data with sequence number 3. The data 232 is an A-MPDU frame in which padding (P) is performed on the data 202 (S/N 2), which is the MSDU data with sequence number 2.

Fig. 12 is a diagram illustrating a third example of a configuration in which the data 201 to 203 in Fig. 5 is transmitted by distributing the data over two links.

In Fig. 12, in a case where the transmission-side communication device 10Tx can grasp a time T21 that is a transmission waiting time in the link 2, which is another link, when a predetermined time T22 elapses and transmission on the link 1 becomes possible, the transmission-side communication device 10Tx calculates a transmission opportunity (TXOP: Transmission Opportunity) in each link from the information length of the subsequent data and transmits the transmission opportunity as an aggregated A-MPDU frame.

That is, when the transmission of the MSDU data with sequence number 1 is started on the link 1, the transmission-side communication device 10Tx treats the MSDU data up to the timing at which transmission also becomes possible on the link 2 as fragmented data 201-1 (S/N 1 Fr 1). Then, the remaining data after that timing is set as fragmented data 201-2 (S/N 1 Fr 2), and an A-MPDU frame obtained by aggregating the data 201-2 (S/N 1 Fr 2) and the data 203 (S/N 3) that is the MSDU data with sequence number 3 is transmitted as data 241. Moreover, for the link 2, data 202 (S/N 2), which is the MSDU data with sequence number 2, is transmitted at a timing when transmission becomes possible.

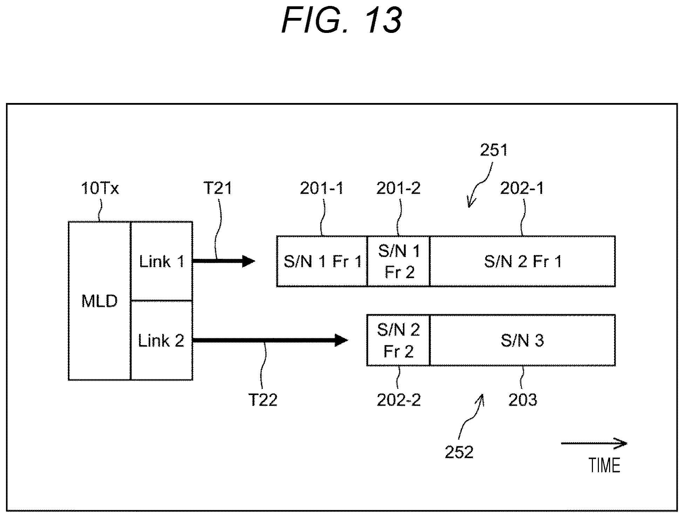

Fig. 13 is a diagram illustrating a fourth example of a configuration in which the data 201 to 203 in Fig. 5 is transmitted by distributing the data over two links.

In Fig. 13, similarly to Fig. 12, in a case where the transmission-side communication device 10Tx can grasp the time T22 that is a transmission waiting time in the link 2 when the predetermined time T21 elapses and transmission on the link 1 becomes available, the transmission-side communication device 10Tx calculates a transmission opportunity (TXOP) in each link from the information length of the subsequent data and transmits the transmission opportunity as an aggregated A-MPDU frame, but the following points are different.

That is, when the transmission of the MSDU data with sequence number 1 is started on the link 1, the transmission-side communication device 10Tx treats the MSDU data up to the timing at which transmission also becomes possible on the link 2 as the fragmented data 201-1 (S/N 1 Fr 1). Moreover, the remaining data thereafter is treated as fragmented data 201-2 (S/N 1 Fr 2), and an A-MPDU frame obtained by aggregating the data 201-2 (S/N 1 Fr 2) and fragmented data 202-1 (S/N 2 Fr 1) of the MSDU data with sequence number 2 is transmitted as data 251 so that the transmission opportunity (TXOP) ends at the same timing on the link 1 and the link 2. That is, the data 251 is an A-MPDU frame obtained by aggregating the data 201-1 (S/N 1 Fr 1), the data 201-2 (S/N 1 Fr 2), and the data 202-1 (S/N 2 Fr 1).

Moreover, for the link 2, an A-MPDU frame obtained by aggregating the data 202-2 (S/N 2 Fr 2) obtained by fragmenting the remaining data with sequence number 2 and the data 203 (S/N 3), which is the MSDU data with sequence number 3, is transmitted as the data 252 at the timing when transmission becomes possible. As a result, the boundaries of the fragmented data are aligned in each link.

### <<Second Example>>

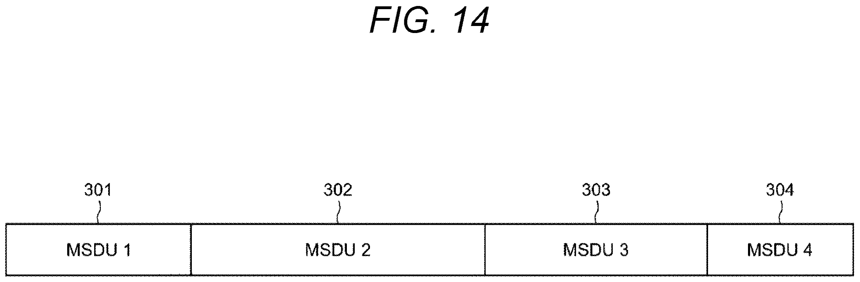

Fig. 14 illustrates a second example in a case where a plurality of MSDUs having different information lengths are present as data transmitted from the transmission-side communication device 10Tx. In Fig. 14, data of four MSDUs, that is, data 301 that is the MSDU 1, data 302 that is the MSDU 2, data 303 that is the MSDU 3, and data 304 that is the MSDU 4 are each configured as variable-length data.

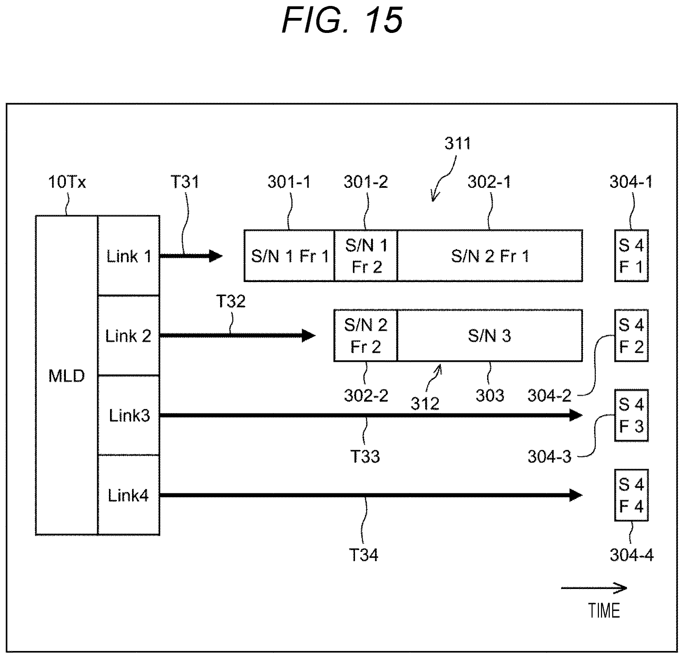

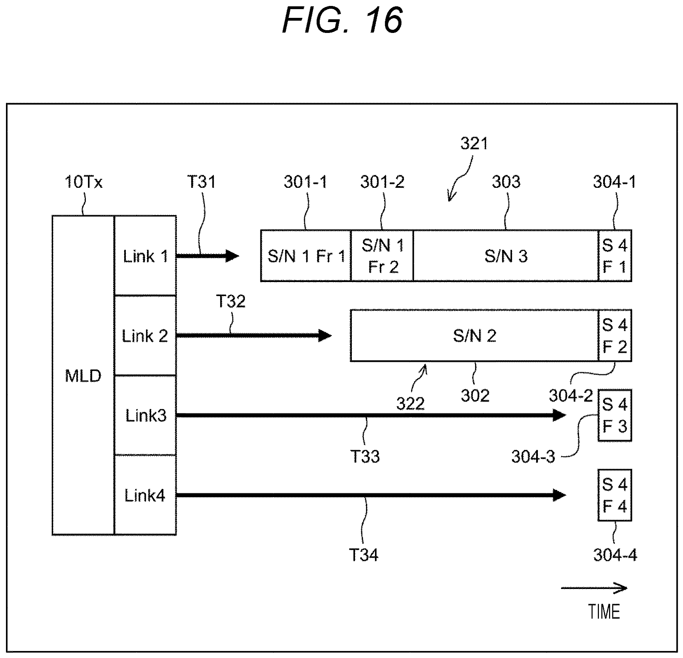

Hereinafter, Figs. 15 and 16 exemplify a configuration in a case where the data 301 to 304 illustrated in Fig. 14 are transmitted. Furthermore, Figs. 15 and 16 exemplify a configuration in a case where transmission is performed using four links of a link 1 (Link 1), a link 2 (Link 2), a link 3 (Link 3), and a link 4 (Link 4) as an example of a plurality of links in the multi-link operation.

Fig. 15 is a diagram illustrating a first example of a configuration in which the data 301 to 304 in Fig. 14 is transmitted by distributing the data over four links.

Fig. 15 illustrates a configuration in a case where the transmission-side communication device 10Tx, which performs the multi-link operation, performs transmission via the four links of the links 1 to 4. The time until the transmission-side communication device 10Tx can use the transmission path according to a predetermined access control procedure is indicated by arrows T31 and T34 for each link.

That is, when the transmission of the MSDU data with sequence number 1 becomes possible on the link 1, the transmission-side communication device 10Tx treats the MSDU data up to the timing at which transmission also becomes possible on the link 2 as fragmented data 301-1 (S/N 1 Fr 1). Moreover, the remaining data thereafter is treated as fragmented data 301-2 (S/N 1 Fr 2), and an A-MPDU frame obtained by aggregating the data 301-2 (S/N 1 Fr 2) and fragmented data 302-1 (S/N 2 Fr 1) of the MSDU data with sequence number 2 is transmitted as data 311 so that the transmission opportunity (TXOP) ends at the same timing on the link 1 and the link 2. That is, the data 311 is an A-MPDU frame obtained by aggregating the data 301-1 (S/N 1 Fr 1), the data 301-2 (S/N 1 Fr 2), and the data 302-1 (S/N 2 Fr 1).

Moreover, for the link 2, an A-MPDU frame obtained by aggregating data 302-2 (S/N 2 Fr 2) obtained by fragmenting the remaining data with sequence number 2 and the data 303 (S/N 3), which is the MSDU data with sequence number 3, is transmitted as data 312 at the timing when transmission becomes possible.

Thereafter, when the links 1 to 4 becomes available, MSDU data with sequence number 4 is fragmented according to the number of available links, and is divided into fragments 1 to 4(Fr 1, Fr 2, Fr 3, Fr 4). That is, the first fragmented data 304-1 (S/N 4 Fr 1, abbreviated as "S4 F 1" in the drawing) is transmitted on the link 1, the next fragmented data 304-2 (S/N 4 Fr 2, abbreviated as "S4 F 2" in the drawing) is transmitted on the link 2, the next fragmented data 304-3(S/N 4 Fr 3, abbreviated as "S4 F 3" in the drawing) is transmitted on the link 3, and the last fragmented data 304-4(S/N 4 Fr 4, abbreviated as "S4 F 4" in the drawing) is transmitted on the link 4. In this way, it is also possible to match the timing at which transmission becomes possible on many links.

Fig. 16 is a diagram illustrating a second example of a configuration in which the data 301 to 304 in Fig. 14 is transmitted by distributing the data over four links.

Similarly to Fig. 15, Fig. 16 illustrates a configuration in a case where the transmission-side communication device 10Tx, which performs the multi-link operation, performs transmission via four links of links 1 to 4, and times until the transmission path can be used according to a predetermined access control procedure are indicated by the arrows T31 to T34.

That is, when the transmission of the MSDU data with sequence number 1 is started on the link 1, the transmission-side communication device 10Tx treats the MSDU data with sequence number 1 up to the timing at which transmission also becomes possible on the link 2 as the fragmented data 301-1 (S/N 1 Fr 1), and transmits, as data 321, an A-MPDU frame obtained by aggregating the fragmented data 301-1 (S/N 1 Fr 1), the fragmented data 301-2 (S/N 1 Fr 2) obtained by fragmenting the remaining data thereafter, the data 303 (S/N 3), which is the MSDU data with sequence number 3, and the data 304-1 (S/N 4 Fr 1, abbreviated as "S4 F 1" in the drawing) obtained by fragmenting the MSDU data with sequence number 4.

Moreover, on the link 2, an A-MPDU frame obtained by aggregating data 302 that is the MSDU data of the sequence number 2 and the data 304-2 (S/N 4 Fr 2, abbreviated as "S4 F2" in the drawing) that is a part of the remaining data obtained by fragmenting the sequence number 4 is transmitted as data 322. Furthermore, on the link 3, the data 304-3 (S/N 4 Fr 3, abbreviated as "S4 F3" in the drawing) that is a part of the remaining data obtained by fragmenting the sequence number 4 is transmitted. Similarly, also on the link 4, the data 304-4 (S/N 4 Fr 4, abbreviated as "S4 F4" in the drawing) that is a part of the remaining data obtained by fragmenting the sequence number 4 is transmitted.

### <<Third Example>>

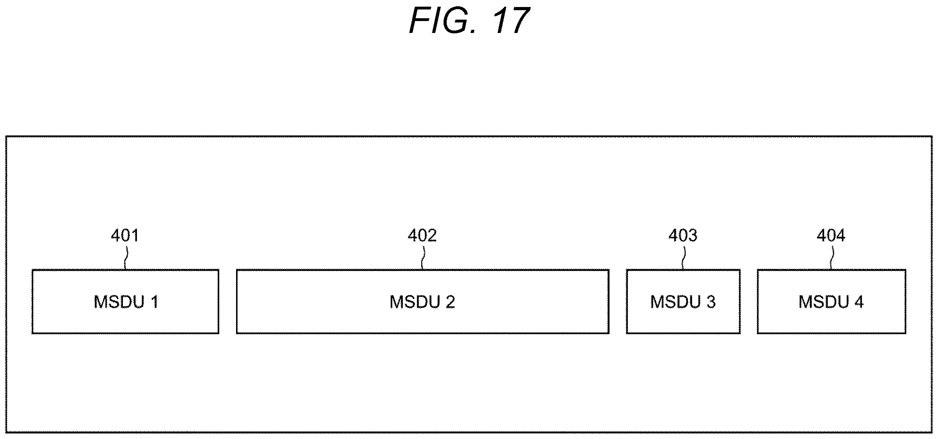

Fig. 17 illustrates a third example in a case where a plurality of MSDUs having different information lengths are present as data transmitted from the transmission-side communication device 10Tx. In Fig. 17, data of four MSDUs, that is, data 401 that is the MSDU 1, data 402 that is the MSDU 2, data 403 that is the MSDU 3, and data 404 that is the MSDU 4 are each configured as variable-length data.

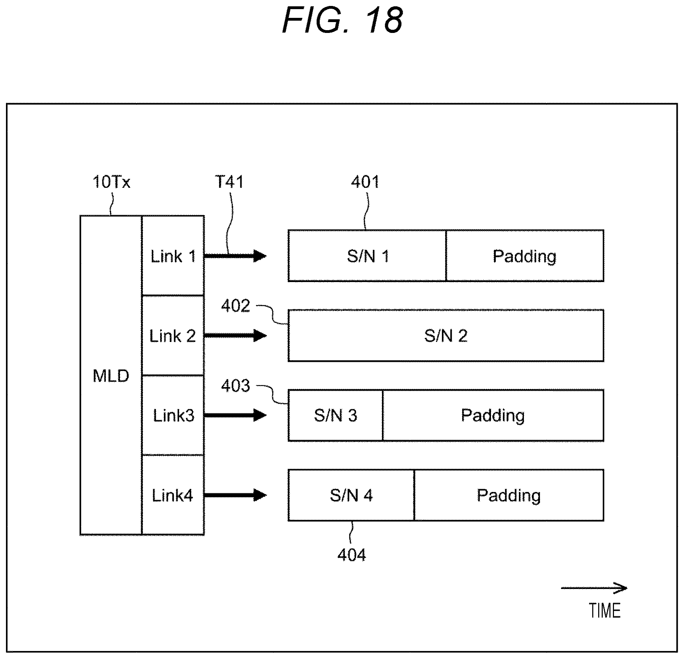

In this case, similarly to the conventional method, a configuration in a case where data is transmitted using four links without fragmenting is as illustrated in Fig. 18. In Fig. 18, the data 401 (S/N 1) that is the MSDU data with sequence number 1 is transmitted on link 1, the data 402 (S/N 2) that is the MSDU data with sequence number 2 is transmitted on link 2, the data 403 (S/N 3) that is the MSDU data with sequence number 3 is transmitted on link 3, and the data 404 (S/N 4) that is the MSDU data with sequence number 4 is transmitted on link 4.

However, since the MSDU data transmitted in the wireless LAN system is configured with a variable length, in order to match the timing at which the transmission ends on all the links after the transmission is performed on each link from time T41, it is necessary to add padding (Padding) corresponding to the MSDU data having the longest information length transmitted on the link 2 (Link 2) to the MSDU data on the other links (Link 1, Link 3, Link 4) and transmit the individual data, which deteriorates the efficiency. Furthermore, since it is necessary to modulate and transmit data at a low transmission rate according to the state of the transmission path regardless of the information length of the data, it is necessary to add padding over a longer time in a case where transmission can be performed only at a low rate on one link.

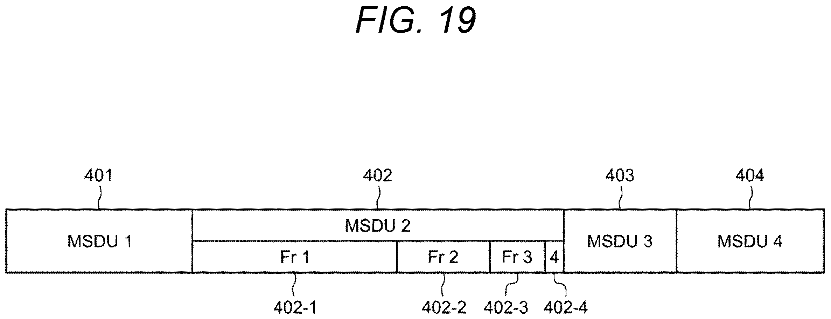

Therefore, in the present disclosure, as illustrated in Fig. 19, by performing fragment having a variable length on the longest MSDU data among the data of the four MSDUs in Fig. 17, the fragment is performed by optimizing the occupancy time of data transmission in all the links according to the number of available links. In Fig. 19, since the data 402 has the longest information length and the number of links is four, the MSDU data with sequence number 2 is fragmented and divided into data 402-1 (S/N 2 Fr 1), data 402-2 (S/N 2 Fr 2), data 402-3 (S/N 2 Fr 3), and data 402-4 (S/N 2 Fr 4).

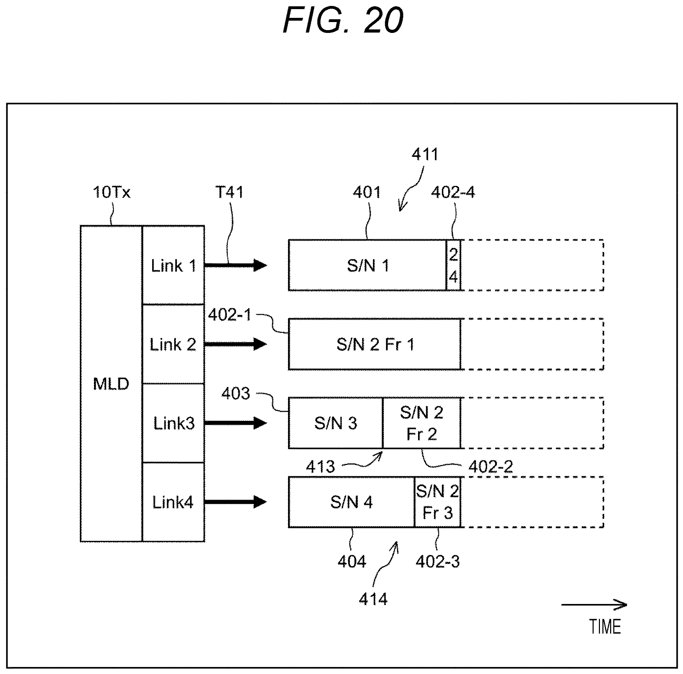

As a result, as illustrated in Fig. 20, on the link 1, data 411 obtained by aggregating the data 401 (S/N 1) that is the MSDU data with sequence number 1 and data 402-4(S/N 2 Fr 4, abbreviated as "2 4" in the drawing) that is the fourth fragmented data with sequence number 2 is transmitted, and on the link 2, only the data 402-1 (S/N 2 Fr 1) that is the first fragmented data with sequence number 2 is transmitted. Moreover, on the link 3, data 413 obtained by aggregating the data 403 (S/N 3) that is the MSDU data with sequence number 3 and the data 402-2 (S/N 2 Fr 2) that is the second fragmented data with sequence number 2 is transmitted, and on the link 4, data 414 obtained by aggregating the data 404 (S/N 4) that is the MSDU data with sequence number 4 and the data 402-3 (S/N 2 Fr 3) that is the third fragmented data with sequence number 2 is transmitted.

In this way, in the present disclosure, by matching the end timing in the data transmitted on all the links, efficiency is improved when, for example, a block ACK frame is returned thereafter. Moreover, since padding is unnecessary in each link, an effect of significantly improving the utilization efficiency of the transmission path as indicated by the broken line in Fig. 20 can be obtained as compared with Fig. 18.

Note that, although the MLO fragment in the transmission-side communication device 10Tx has been described in the above description, the reception-side communication device 10Rx can restore the data (transmission data) before being fragmented by collecting the fragment data transmitted on the plurality of links. For example, in Fig. 20, the reception-side communication device 10Rx collects the data 402-4 (S/N 2 Fr 4) transmitted on the link 1, the data 402-1 (S/N 2 Fr 1) transmitted on the link 2, the data 402-2 (S/N 2 Fr 2) transmitted on the link 3, and the data 402-3 (S/N 2 Fr 3) transmitted on the link 4, so that the data 402 (Fig. 19) can be restored from these data and constructed as reception data. The reception data is data received by the reception-side communication device 10Rx.

As described above, the transmission-side communication device 10Tx can divide the transmission data on the basis of the link use status and transmit the data frame including the divided data using the plurality of links. Here, the use status of the link indicates whether or not the link is used by another device at the time when the transmission-side communication device 10Tx confirms the use status, and further indicates whether or not the link can be used by the own device. Furthermore, the use status of the link may indicate, for how long after the time point at which the transmission-side communication device 10Tx confirms the use status, whether the link is scheduled to be used or available by another device or the own device. That is, the use status of the link can be regarded as indicating a duration in which the link is available.

### <Communication Sequence>

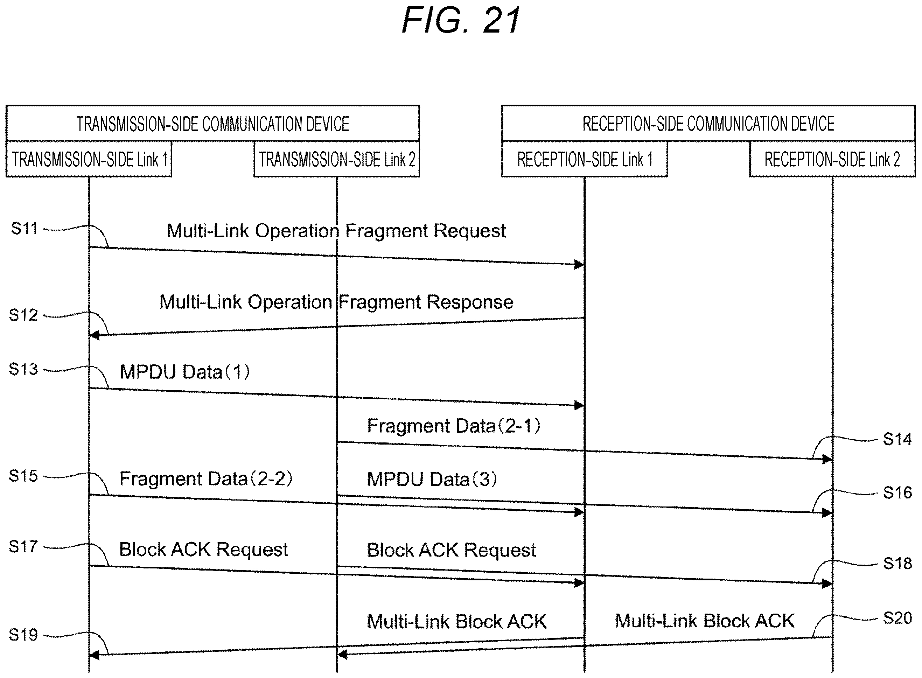

Fig. 21 is a diagram illustrating a configuration example of a communication sequence between the wireless communication devices to which the present disclosure is applied. In Fig. 21, exchange of signals exchanged between the respective links of the transmission-side communication device 10Tx and the reception-side communication device 10Rx is schematically illustrated by arrows.

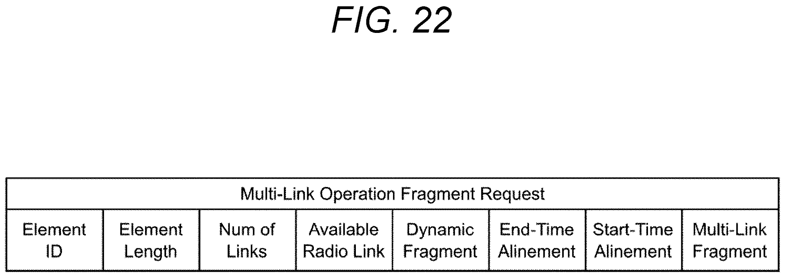

For example, a fragment request (Multi-Link Operation Fragment Request) of the multi-link operation in which a desired available parameter on the transmission side is described is transmitted from the transmission-side communication device 10Tx via the link 1 between the transmission-side communication device 10Tx and the reception-side communication device 10Rx (S11). A detailed configuration of the fragment request of the multi-link operation will be described later with reference to Fig. 22.

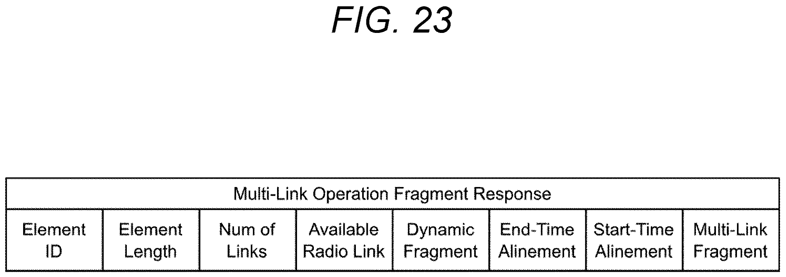

The reception-side communication device 10Rx calculates a parameter of a fragment of the multi-link operation that can be handled by the own device among the fragment requests of the multi-link operation from the transmission-side communication device 10Tx, and transmits a fragment response (Multi-Link Operation Fragment Response) of the multi-link operation in which the respondable parameter is described to the transmission-side communication device 10Tx (S12). A detailed configuration of the fragment response of the multi-link operation will be described later with reference to Fig. 23.

As a result, the transmission-side communication device 10Tx is configured to perform the fragment processing of the multi-link operation on the basis of a parameter that can be handled by the reception-side communication device 10Rx. For example, the transmission-side communication device 10Tx performs access control, and transmits MPDU Data (1), which is data of the first MPDU 1 on the link 1 that has become available earlier (S13).

Furthermore, the transmission-side communication device 10Tx transmits Fragment Data (2-1) obtained by fragmenting data of the next MPDU 2 on the link 2 that has become available next (S14), transmits Fragment Data (2-2) obtained by fragmenting data of the MPDU 2 also on the link 1 (S15), and further transmits MPDU Data (3), which is data of the subsequent MPDU 3, on the link 2 (S16). As a result, the fragment processing is performed so that the end time alignments of the link 1 and the link 2 coincide with each other, and the fragment data is distributed to each link.

Moreover, a block ACK request (Block Ack Request) is transmitted from the transmission-side communication device 10Tx to the reception-side communication device 10Rx as necessary (S17, S18), and the reception-side communication device 10Rx transmits a block ACK (Multi-Link Block Ack) of the multi-link operation in response to the block ACK request (S19, S20). Note that the frame exchange between the block ACK request and the block ACK may be performed on a plurality of links as much as possible as necessary, but may be performed on at least one link (the link 1 or the link 2).

### <Frame Configuration>

Fig. 22 is a diagram illustrating a configuration example of a fragment request (Multi-Link Operation Fragment Request) of the multi-link operation.

The fragment request of the multi-link operation is used in a request frame for inquiring from the transmission-side communication device 10Tx to the reception-side communication device 10Rx about availability when the fragment processing in the multi-link operation is performed.

The request frame is configured as any action frame and may be exchanged at any timing, or may be configured as an information element exchanged between the access point AP and the communication terminal STA at the time of association. Alternatively, the request frame may be exchanged as any frame in a case where a block ACK operation is requested as necessary.

In Fig. 22, the fragment request of the multi-link operation includes Element ID indicating a predetermined element identifier, Element Length indicating an information length of the element, Num of Links indicating the number of available links, Available Radio Link indicating the number of available individual links, Dynamic Fragment indicating a parameter in a case of dynamically fragmenting, End-Time Alinement for matching end timing, Start-Time Alinement for matching start timing, Multi-Link Fragment for performing fragment in the multi-link operation, and the like.

Fig. 23 is a diagram illustrating a configuration example of a fragment response (Multi-Link Operation Fragment Response) of the multi-link operation.

The fragment response of the multi-link operation is used in a response frame for notifying the available parameter from the reception-side communication device 10Rx to the transmission-side communication device 10Tx when the fragment processing in the multi-link operation is performed.

The response frame is configured as any action frame, and may be exchanged as a response frame on the basis of a request from the transmission-side communication device 10Tx, or may be configured as an information element exchanged between the access point AP and the communication terminal STA at the time of association. Alternatively, the request frame may be exchanged as any frame in a case where a block ACK operation is requested as necessary.

In Fig. 23, the fragment response of the multi-link operation includes Element ID indicating a predetermined element identifier, Element Length indicating an information length of the element, Num of Links indicating the number of available links, Available Radio Link indicating the number of available individual links, Dynamic Fragment indicating a parameter in a case of dynamically fragmenting, End-Time Alinement for matching end timing, Start-Time Alinement for matching start timing, Multi-Link Fragment for performing fragment in the multi-link operation, and the like.

Note that the parameters described in the configuration examples in Figs. 22 and 23 are merely examples, and in addition to this, any parameter may be exchanged as necessary.

### <Fragment Data Configuration>

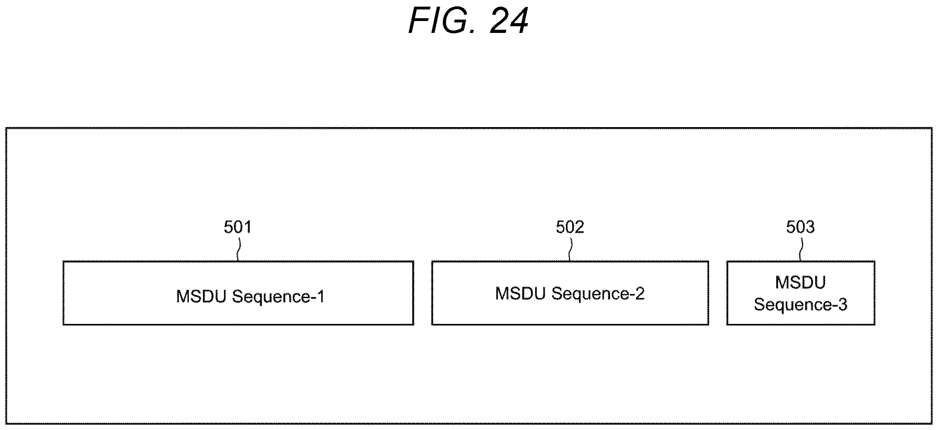

An example in which fragment data is configured as an MPDU by the fragment processing of the present disclosure will be described with reference to Figs. 24 to 31.

Fig. 24 illustrates an example in which a plurality of MSDUs having different information lengths are present as transmission data transmitted from the transmission-side communication device 10Tx. In Fig. 24, data of three MSDUs: data 501 that is an MSDU Sequence-1, data 502 that is an MSDU Sequence-2, and data 503 that is an MSDU Sequence-3 are represented in units of sequence numbers, and are each configured as variable-length data.

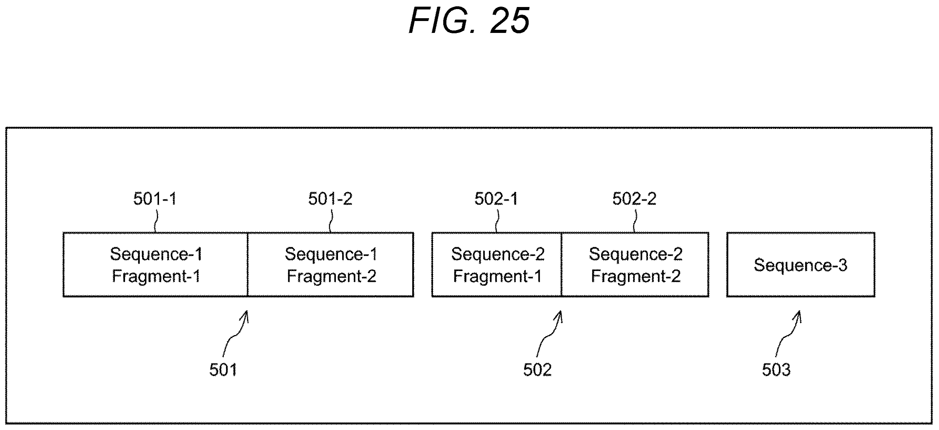

Fig. 25 illustrates a configuration in which the fragment processing is performed on the data 501 and the data 502 among the data 501 to 503 in Fig. 24, but the fragment processing is not performed on the data 503.

Specifically, in Fig. 25, the data 501 (MSDU Sequence-1) is divided into data 501-1 (Sequence-1, Fragment-1) and data 501-2 (Sequence-1, Fragment-2), and the data 502 (MSDU Sequence-2) is divided into data 502-1 (Sequence-2, Fragment-1) and data 502-2 (Sequence-2, Fragment-2). On the other hand, the data 503 (MSDU Sequence-3) is not divided.

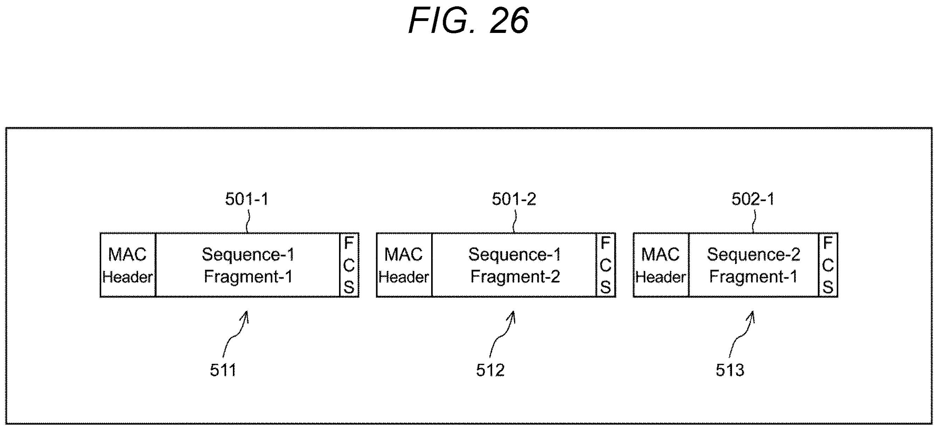

Fig. 26 is a diagram illustrating data to be transmitted on the link 1 among the data in Fig. 25. In Fig. 26, similarly to the configuration of the MPDU frame, a predetermined MAC header is added, and a frame check sequence (FCS: Frame Check Sequence) is added at the end as an error detection code to configure data of the MPDU.

Specifically, in Fig. 26, the MAC header and the FCS are added to the data 501-1 (Sequence-1, Fragment-1) to configure data 511. The MAC header and the FCS are added to the data 501-2 (Sequence-1, Fragment-2) to configure data 512. The MAC header and the FCS are added to the data 502-1 (Sequence-2, Fragment-1) to configure data 513. These pieces of data 511 to 513 are constructed as MPDU data transmitted on the link 1.

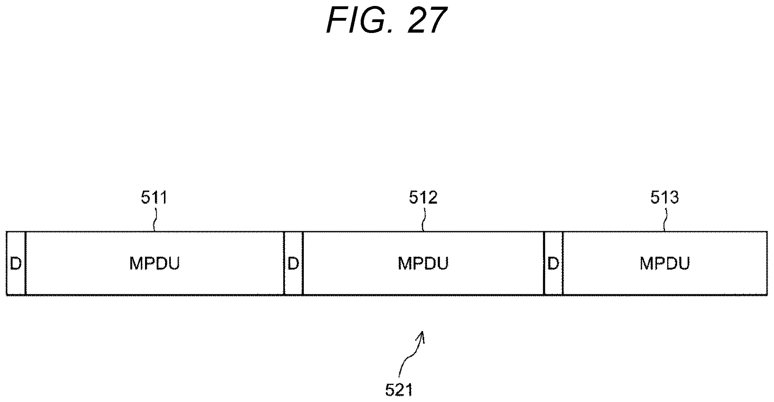

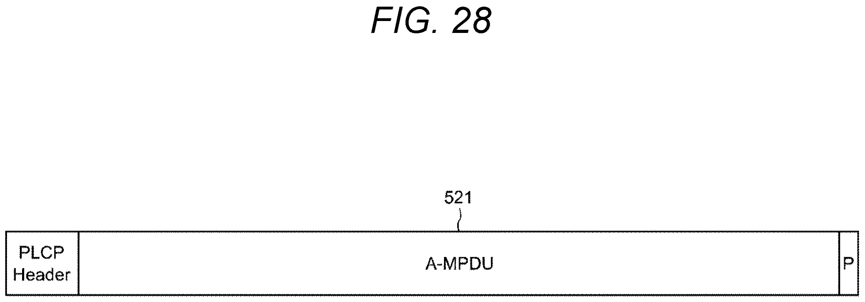

Figs. 27 and 28 are diagrams illustrating an example in which each piece of MPDU data in Fig. 26 is configured as an aggregated A-MPDU frame. In Fig. 27, a delimiter (D: Delimiter) is added to each of the data 511 to 513 as MPDU data, and the data is configured as aggregated A-MPDU data 521. Fig. 28 is a diagram illustrating an example in which a predetermined physical layer convergence protocol (PLCP) header is added to the data 521 of the A-MPDU in Fig. 27 to construct one A-MPDU frame. In Fig. 28, padding (P) is added at the end of the A-MPDU frame as necessary.

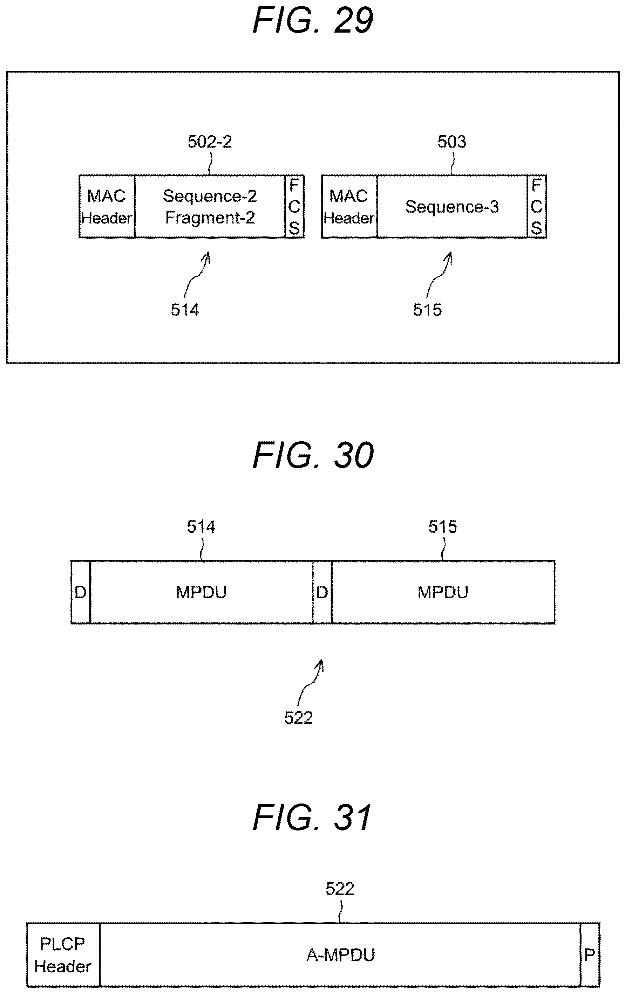

Fig. 29 is a diagram illustrating data to be transmitted on the link 2 among the data in Fig. 25. In Fig. 29, similarly to Fig. 26, a predetermined MAC header is added, and an FCS is added at the end as an error detection code to configure data of the MPDU.

Specifically, in Fig. 29, the MAC header and the FCS are added to the data 502-2 (Sequence-2, Fragment-2) to configure data 514. The MAC header and the FCS are added to the data 503 (MSDU Sequence-3) to configure data 515. These pieces of data 514 to 515 are constructed as MPDU data transmitted on the link 2.

Figs. 30 and 31 are diagrams illustrating an example in which each piece of MPDU data in Fig. 29 is configured as an aggregated A-MPDU frame. In Fig. 30, the delimiter (D) is added to each of the data 514 and 515 as MPDU data, and the data is configured as aggregated A-MPDU data 522. Fig. 31 is a diagram illustrating an example in which a predetermined PLCP header is added to the data 522 of the A-MPDU in Fig. 30 to construct one A-MPDU frame. In Fig. 31, padding (P) is added at the end of the A-MPDU frame as necessary.

### <Data Configuration>

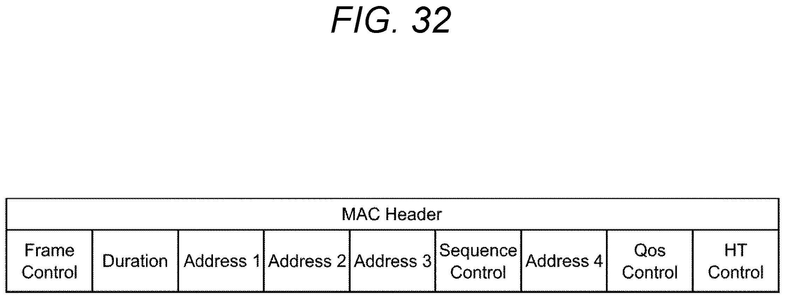

A configuration example of the MAC header and the delimiter corresponding to the fragment processing of the present disclosure will be described with reference to Figs. 32 to 36.

Fig. 32 is a diagram illustrating a configuration example of a MAC header defined in a wireless LAN system of the conventional method.

In Fig. 32, the MAC header includes Frame Control indicating a characteristic of a frame, Duration indicating a duration of the frame, Address 1 to Address 4 in which an address group for identifying a sending destination and a sending source is described, Sequence Control in which a sequence number and a fragment number are described, QoS Control in which a parameter corresponding to QoS is described, HT Control in which an extension parameter of a high throughput function is described, and the like.

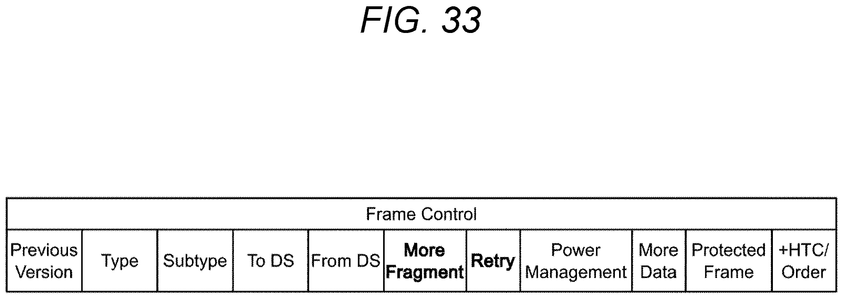

Fig. 33 is a diagram illustrating a configuration example of a Frame Control subfield defined in the wireless LAN system of the conventional method.

In Fig. 33, Frame Control includes Previous Version indicating a version, Type indicating a main format of a frame, Subtype indicating a sub-format of the frame, To DS indicating data to the distribution system, From DS indicating data from the distribution system, More Fragment indicating data in the middle of being fragmented, Retry indicating retransmission, Power Management indicating management of transmission power, More Data indicating presence of data, Protected Frame indicating a protected frame, +HTC/Order indicating a parameter added by HTC or the like.

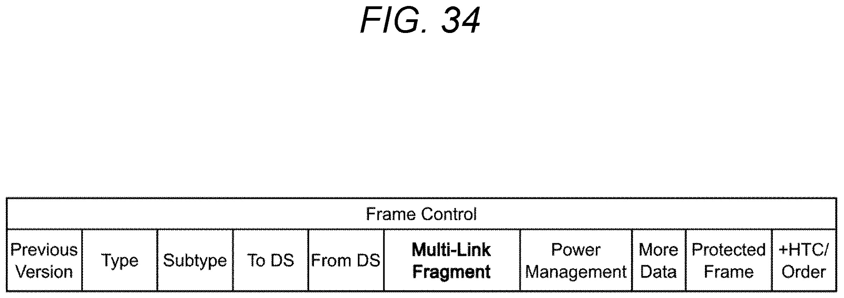

Fig. 34 is a diagram illustrating a configuration of a Frame Control subfield indicating that the fragment processing of the present disclosure is performed.

In Fig. 34, Frame Control follows the Frame Control subfield of the conventional method (Fig. 33), integrates More Fragment indicating fragmented intermediate data and Retry indicating retransmission, and treats a state in which both flags are set as Multi-Link Fragment, thereby being configured to indicate that the fragment processing of the present disclosure is being performed. With this configuration, the reception-side communication device 10Rx recognizes that the fragmented data is stored from the information included in the MAC header, and can perform, for example, error detection on the fragmented data portion.

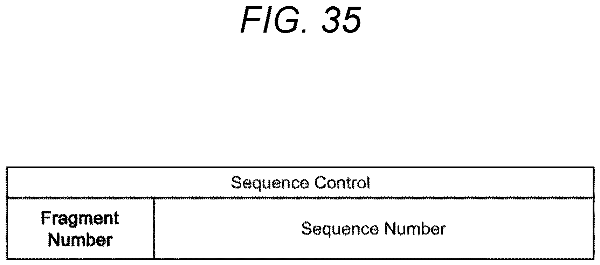

Fig. 35 is a diagram illustrating a configuration example of a Sequence Control subfield defined in the wireless LAN system of the conventional method.

In Fig. 35, Sequence Control includes Fragment Number indicating the fragmented order in the subsequent sequence number and Sequence Number indicating the sequence number of the MSDU. That is, different Fragment Numbers are described in the same sequence number to construct the data frame. In the present disclosure, Sequence Control is configured such that this Fragment Number is assigned according to the fragmented order, which is compatible with the conventional method.

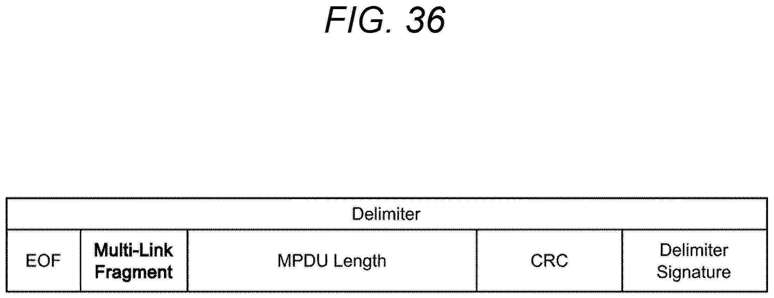

Fig. 36 is a diagram illustrating a configuration example of the delimiter included in an aggregated A-MPDU frame.

In Fig. 36, the delimiter (Delimiter) includes EOF indicating padding at the end of a frame, MPDU Length indicating an information length of an MPDU alone, Cyclic Redundancy Check (CRC) for detecting an error of the delimiter, and Delimiter Signature indicating the delimiter, which are defined in the wireless LAN system of the conventional method. Moreover, an example is illustrated in which Multi-Link Fragment indicating that the fragment processing of the present disclosure is performed is defined in a bit that is a reserved bit in the conventional method. As a result, it is possible to indicate that the frame includes data in which Multi-Link Fragment is performed as the delimiter without defining the above-described Frame Control subfield (Fig. 34).

### <Signal Processing Structure in Device>

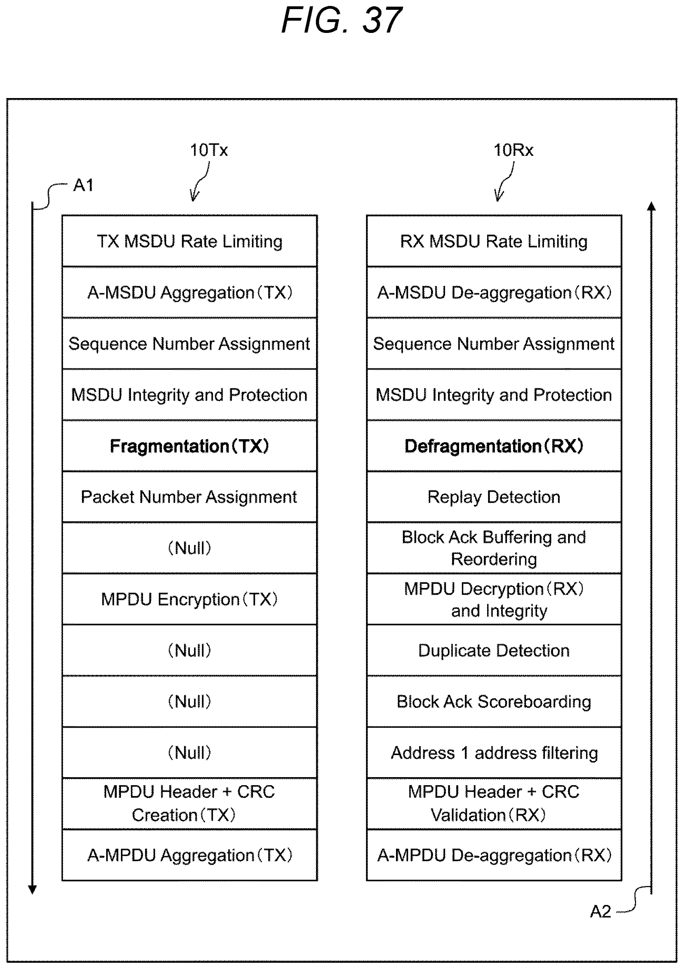

Signal processing performed by the wireless communication device 10 in the wireless LAN system will be described. For comparison, the structure of the signal processing of the present disclosure will be illustrated after the structure of the signal processing of the conventional method is illustrated. Fig. 37 is a diagram illustrating the structure of the signal processing in a device in the wireless LAN system of the conventional method.

In Fig. 37, each signal processing performed in the device is represented by a corresponding one of squares, and the left side in the drawing illustrates a flow of signal processing processed in the transmission-side communication device 10Tx that transmits data, the flow being performed in order from the top to the bottom in the drawing as indicated by an arrow A1. In the wireless LAN system of the conventional method, in the transmission-side communication device 10Tx, processing of TX MSDU Rate Limiting, A-MSDU Aggregation (TX), Sequence Number Assignment, MSDU Integrity and Protection, Fragmentation (TX), Packet Number Assignment, MPDU Encryption (TX), MPDU Header + CRC Creation (TX), and A-MPDU Aggregation (TX) is performed in this order.

In Fig. 37, the right side in the drawing illustrates a flow of signal processing performed in the reception-side communication device 10Rx that receives data, the flow being performed in order from the bottom to the top as indicated by an arrow A2. In the wireless LAN system of the conventional method, in the reception-side communication device 10Rx, processing of A-MPDU De-aggregation (RX), MPDU Header + CRC Validation (RX), Address 1 address Filtering, Block Ack Scoreboarding, Duplicate Detection, MPDU Decryption (RX) and Integrity, Block Ack Buffering and Reordering, Replay Detection, Defragmentation (RX), MSDU Integrity and Protection, Sequence Number Assignment, A-MSDU De-aggregation (RX), and RX MSDU Rate Limiting is performed in this order.

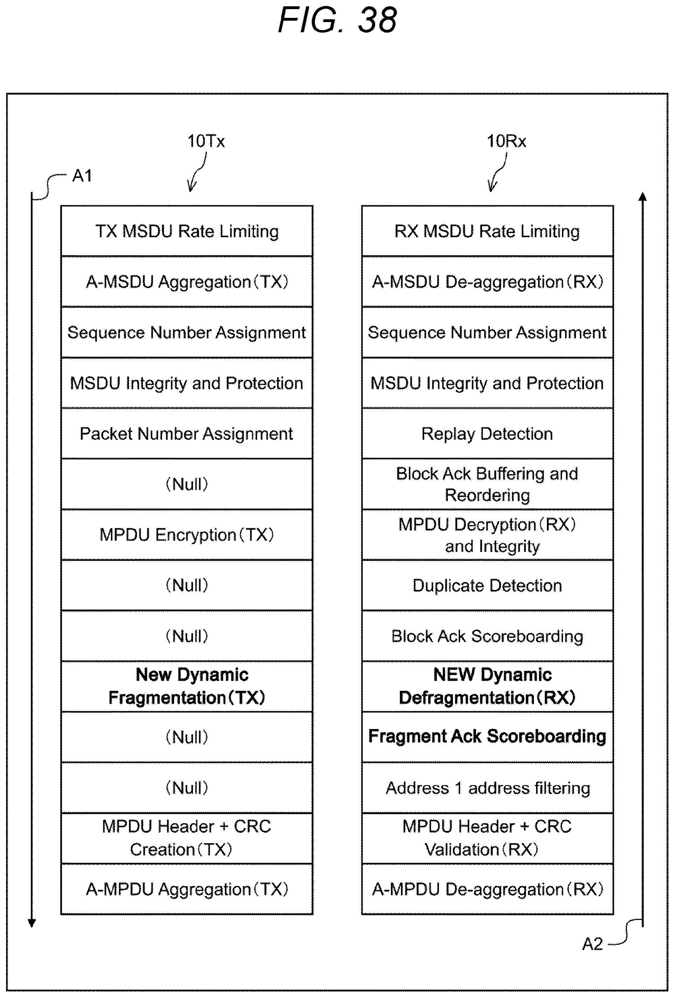

Fig. 38 is a diagram illustrating the structure of the signal processing in a device in the wireless LAN system of the present disclosure. In Fig. 38, similarly to Fig. 37, the left side in the drawing illustrates a flow of signal processing in the transmission-side communication device 10Tx, the flow being performed in the order from the top to the bottom in the drawing, and the right side in the drawing illustrates a flow of signal processing in the reception-side communication device 10Rx, the flow being performed in the order from the bottom to the top in the drawing.

In the signal processing of the present disclosure, the conventional fragment may be individually performed, but processing may be performed at the later stage in order to perform the fragment on the basis of a parameter added in processing at the later stage. That is, in the transmission-side communication device 10Tx, processing of Fragmentation (TX) is performed after processing of TX MSDU Rate Limiting, A-MSDU Aggregation (TX), Sequence Number Assignment, and MSDU Integrity and Protection is performed in the conventional method, but processing of Packet Number Assignment and MPDU Encryption (TX) is performed in the present disclosure. Then, processing of Dynamic Fragmentation (TX) by the multi-link operation of the present disclosure may be performed. Then, processing of MPDU Header + CRC Creation (TX) and A-MPDU Aggregation (TX) is performed, and a frame to be transmitted is constructed.

On the other hand, in the reception-side communication device 10Rx, processing of A-MPDU De-aggregation (RX), MPDU Header + CRC Validation (RX), and Address 1 address Filtering is performed similarly to the conventional method. In the present disclosure, processing of Fragment Ack Scoreboarding, Dynamic Defragmentation (RX) may be sandwiched therebetween. Then, processing of Block Ack Scoreboarding, Duplicate Detection, MPDU Decryption (RX) and Integrity, Block Ack Buffering and Reordering, and Replay Detection, which are present in the flow of the conventional method, may be performed. Note that Fragment Ack Scoreboarding and Dynamic Defragmentation (RX) may include a management operation of Fragment Data such as Duplicate Detect in a fragmented portion as necessary.

Then, Defragmentation (RX) required in Fragmentation of the conventional method may be processed in this portion, but may not be processed in this portion if unnecessary. Moreover, processing of MSDU Integrity and Protection, Sequence Number Assignment, A-MSDU De-aggregation (RX), and RX MSDU Rate Limiting may be performed.

### <Operation of Wireless Communication Device>

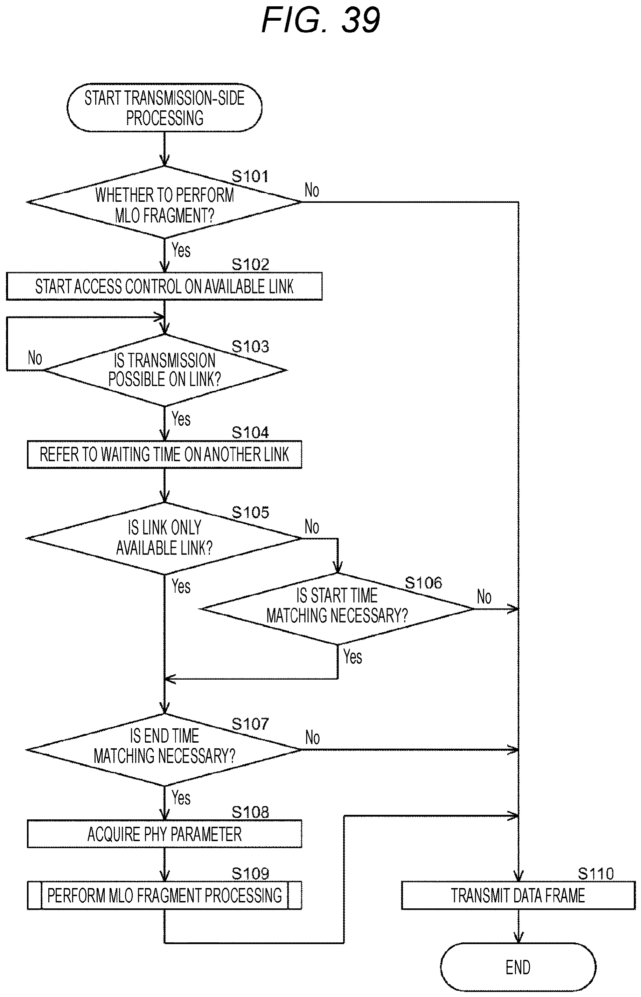

A flow of transmission-side processing performed by the transmission-side communication device 10Tx is described with reference to a flowchart in Fig. 39.

The transmission-side communication device 10Tx determines whether or not the fragment processing (MLO fragment) can be performed by the multi-link operation of the present disclosure (S101). If it is determined that the MLO fragment is performed (Yes in S101), access control on the available link is started (S102).

Then, if transmission becomes possible on a certain link (Yes in S103), information such as the waiting time is referred from the use status of another link (S104), and it is determined whether or not the link is the only available link (S105). If the link is not the only available link (No in S105), it is determined whether start time matching is necessary and transmission matching with another link is possible (S106). If the transmission matching with another link is possible (Yes in S106), end timing alignment processing is performed.

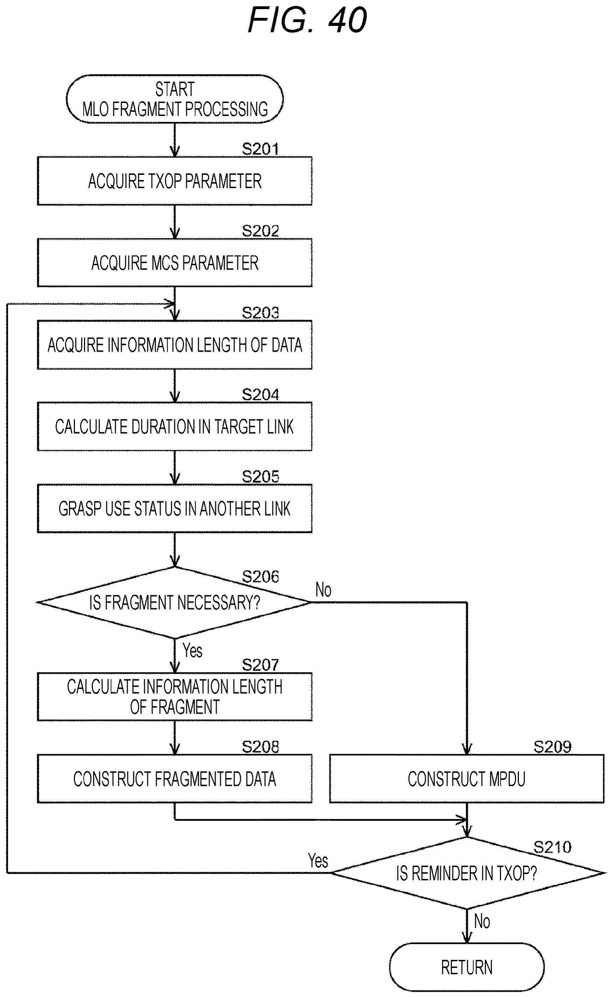

That is, it is determined whether or not the end time matching is necessary (S107), and if it is determined that the end time matching is necessary (Yes in S107), information of the transmission parameter (PHY parameter) of the physical layer in the link is acquired (S108), and the MLO fragment processing is performed (S109). As a result of the MLO fragment processing, an optimal dynamic fragment is performed and the fragmented data is transmitted as a data frame (S110). Details of the MLO fragment processing will be described later with reference to the flowchart in Fig. 40.

Note that, if it is determined that the MLO fragment is not performed (No in S101), if it is determined that the start time matching is not performed (No in S106), or if it is determined that the end time matching is not performed (No in S107), the data is transmitted as it is as a data frame (S110).

Here, the MLO fragment processing corresponding to step S109 in Fig. 39 is described in detail with reference to the flowchart in Fig. 40. Here, a flow is illustrated in which the transmission-side communication device 10Tx performs the fragment processing by the multi-link operation of the present disclosure.

The transmission-side communication device 10Tx acquires a parameter of a transmission opportunity (TXOP) in a target link (S201), and acquires an MCS parameter, which is necessary encoding information that can be decoded at a reception destination in a case of transmitting data (S202). Furthermore, the information length of data to be transmitted next is acquired (S203), a duration (Duration) available in a target link is calculated (S204), and a use status in another link is further grasped (S205).

Then, it is determined whether or not it is necessary to perform the fragment processing (S206). In this determination processing, for example, in a case where the end time alignment is performed, when the remaining time of the frame transmission on the link 1 on which transmission is already being performed is shorter than the time (information length) of the data to be transmitted on the link 2 on which transmission is newly performed, it is determined that it is necessary to fragment the data to a length corresponding to the remaining time of the frame transmission on the link 1 (Yes in S206). On the other hand, when the remaining time of the frame transmission on the link 1 is longer than the time (information length) of the data to be transmitted on the link 2 on which transmission is newly performed, it is determined that the data can be transmitted without performing the fragment (No in S206). The flow of the data in Figs. 6 to 8 can be realized by performing such end time alignment, for example.

Furthermore, for example, in a case where the start time alignment is performed, the timing available for the multi-link operation is calculated by referring to the time already used for transmission and reception of other data, the value of network allocation vector (NAV), and the like on a link other than the available link. Then, if the remaining time of the frame transmission is shorter than the time of the newly transmitted data, it is determined that the fragment needs to be performed (Yes in S206), and if the remaining time of the frame transmission is longer than the time of the newly transmitted data, it is determined that the data can be transmitted without performing the fragment (No in S206). For example, in a case where frame transmission is performed on the available link 1, if the time from when the link 1 becomes available to when the link 2 becomes available is shorter than the time (information length) of the data transmitted on the link 1, it is determined that it is necessary to fragment the data to a length corresponding to the time until the link 2 becomes available (Yes in S206). On the other hand, if the time until the link 2 becomes available is longer than the time (information length) of the data to be transmitted on the link 1, it is determined that the data can be transmitted without performing the fragment (No in S206). The flow of the data in Figs. 9 to 11 can be realized by performing such start time alignment, for example.

If it is determined that the fragment needs to be performed (Yes in S206), the information length (Fragment Length) of the fragment on the link is calculated (S207), and the fragmented data is constructed (S208). In this way, the fragment data can be generated by dividing the transmission data into any information lengths on the basis of the link use status. At this time, the information length of the fragment data (for example, S/N 2 Fr 1 in Fig. 6, S/N 1 Fr 1 in Fig. 9) can be determined on the basis of the duration available in the target link (for example, Link 1 in Figs. 6 and 9).

In step S207, the information length to be fragmented can be calculated from the time available on the link. For example, in a case where the end time alignment is performed, the size of the fragment is determined such that the length of time corresponding to a remaining time of frame transmission on the link 1 coincides with the length of time as a PHY layer protocol data unit (PPDU) including overhead information such as a MAC header and a frame check sequence (FCS) of data to be newly transmitted.

Furthermore, for example, in a case where the start time alignment is performed, the size of the fragment is determined such that the length of time of timing available for the multi-link operation coincides with the length of time as a PPDU including overhead information such as a MAC header and a frame check sequence (FCS) of data to be newly transmitted.

On the other hand, if it is determined that the fragment processing does not need to be performed (No in S206), the MPDU is constructed without performing the fragment (S209). Then, if there is a remainder in the transmission opportunity (TXOP) (Yes in S210), the process returns to step S203, the information length of the remaining data is acquired, and the subsequent processing is performed. On the other hand, if there is no remaining transmission opportunity (TXOP) (No in S210), the series of processing is ended, and the process returns to step S109 in Fig. 39. That is, if there is a remaining transmission opportunity (TXOP), an A-MPDU frame can be constructed as necessary. Furthermore, if there is a remaining fragmented data, it is further determined whether it is necessary to perform the fragment, and if there is no fragmented data, it is determined whether it is necessary to perform the fragment for the MSDU of the next sequence.

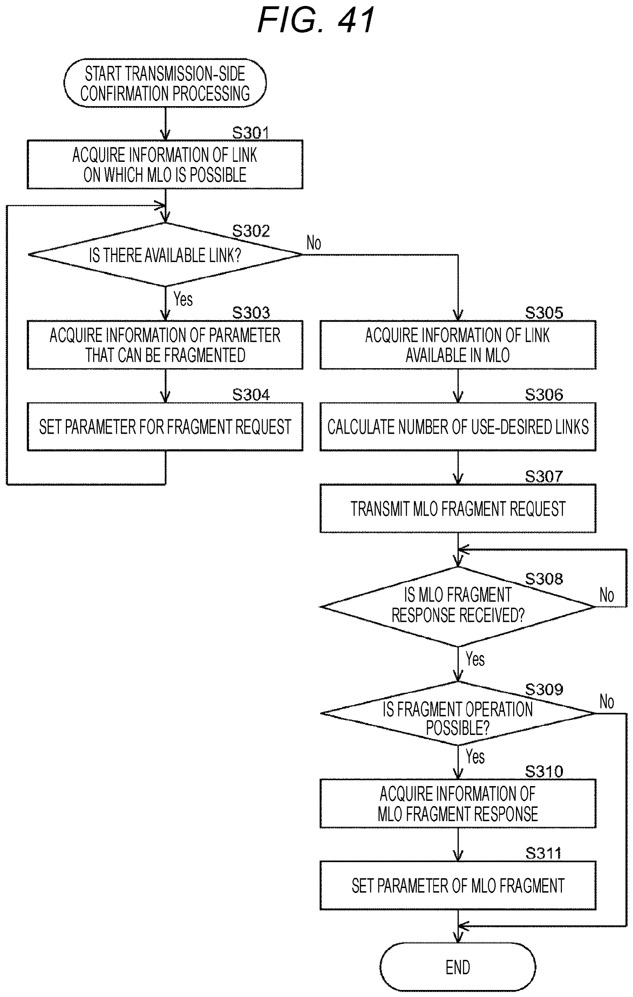

Next, a flow of transmission-side confirmation processing performed by the transmission-side communication device 10Tx is described with reference to the flowchart in Fig. 41.

The transmission-side communication device 10Tx acquires information of a link on which the multi-link operation of the present disclosure is possible (S301), and determines whether or not there is an available link on the basis of the information (S302). Then, if it is determined that there is a link available in the multi-link operation (Yes in S302), information of a parameter that can be fragmented is acquired for each available link (S303), and is set as a parameter for the fragment request (S304). In this operation, parameters are set in all available links.

On the other hand, if it is determined that there is no link available in the multi-link operation (No in S302), that is, when all the parameters are set in all the links available in the multi-link operation and there are no more links available, information (parameter information) of all the links available in the multi-link operation is acquired (S305), the number of links desired to be used here (use-desired links) is calculated (S306), the number of the use-desired links is added to the frame as a parameter of the MLO fragment request (the fragment request of the multi-link operation in Fig. 22), and the frame is transmitted (S307).

Thereafter, when receiving the frame in which the parameter of the MLO fragment response (the fragment response of the multi-link operation in Fig. 23) is described from the reception-side communication device 10Rx (Yes in S308), the transmission-side communication device 10Tx determines whether the fragment operation is possible (S309). Then, if the fragment operation is possible (Yes in S309), the transmission-side communication device 10Tx acquires the parameter information of the MLO fragment response (S310), and sets the parameter of the MLO fragment designated by the reception-side communication device 10Rx (S311). When step S311 ends, a series of processing ends. Note that, if the fragment operation is not possible (No in S309), steps S310 and S311 are skipped, and the processing is terminated without setting these parameters.

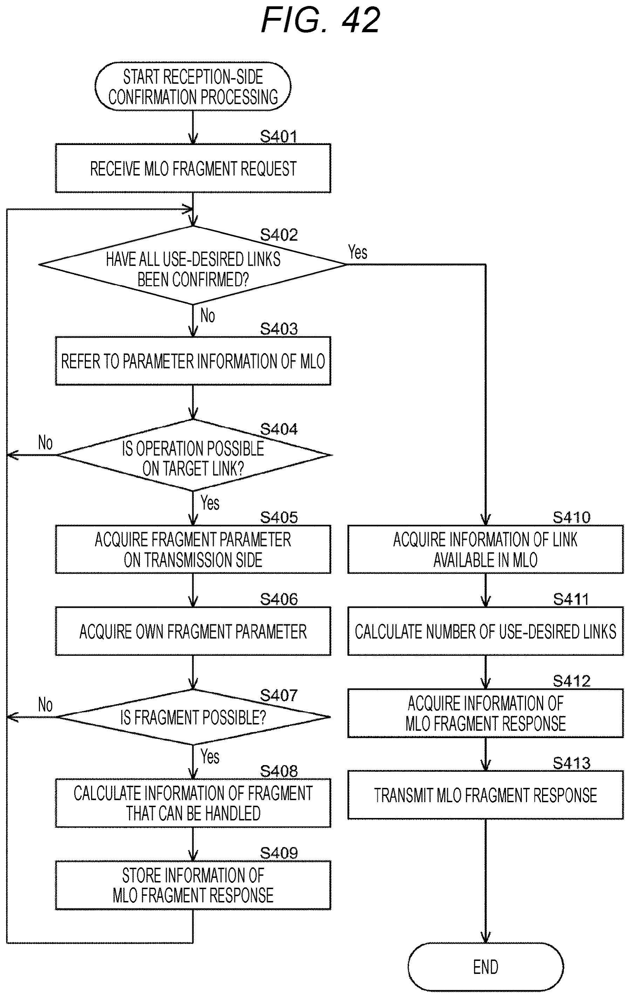

Next, a flow of reception-side confirmation processing performed by the reception-side communication device 10Rx will be described with reference to the flowchart in Fig. 42.

When receiving the frame in which the parameter of the MLO fragment request (the fragment request of the multi-link operation in Fig. 22) is described from the transmission-side communication device 10Tx (S401), the reception-side communication device 10Rx determines whether or not all the use-desired links have been confirmed by individually referring to the use-desired links described in the frame (S402). If all the use-desired links have not been confirmed (No in S402), the parameter information of the multi-link operation in individual links is referred to (S403).

The reception-side communication device 10Rx determines whether or not the operation is possible on the target link on the basis of the referred parameter information (S404). If the operation is possible on the target link (Yes in S404), the parameter (the fragment parameter on the transmission side) requested by the transmission-side communication device 10Tx is acquired (S405), and the own fragment parameter is further acquired (S406). Then, it is determined whether or not the fragment operation is possible on the basis of these fragment parameters (S407).

If it is determined that the fragment operation is possible (Yes in S407), information (parameter information) of the fragment that can be handled is calculated (S408), and stored in an internal memory or the like as information (parameter information) of the MLO fragment response of the link (S409). When step S409 ends, the process returns to step S402. Note that, If it is determined that the operation is not possible on the target link (No in S404) or if it is determined that the fragment operation is not possible (No in S407), it is not necessary to store the information of the MLO fragment response, and the process returns to step S402.

On the other hand, if it is determined whether or not all the use-desired links have been confirmed (Yes in S402), information (parameter information) of the links available in the multi-link operation is acquired (S410), and the number of actually available links is calculated from the number of links desired to be used here (S411). Then, according to the links actually available, information of all the MLO fragment responses is acquired (S412) and added to the frame as a parameter of the MLO fragment response (the fragment response of the multi-link operation in Fig. 23), and the frame is transmitted (returned) (S413).

Note that even in a case where there is no link describing information of the MLO fragment response, the reception-side communication device 10Rx may transmit a frame to which the MLO fragment response describing a parameter that cannot be handled is added as necessary. When step S413 ends, the series of processing ends.

As described above, under the control of the control unit (for example, the communication control unit 103 in Fig. 4) of the wireless communication module 15, the transmission-side communication device 10Tx of the present disclosure can divide the transmission data to generate the first data and the second data (for example, *S*/*N* 2 Fr 1, *S*/*N* 2 Fr 2 in Fig. 6) on the basis of the use status of the first link (for example, Link 1 in Fig. 6) included in the plurality of links (for example, Link 1, Link 2 in Fig. 6) set with the reception-side communication device 10Rx, and can construct and transmit the data frame including the first data or the second data by using the first link or the second link (for example, Link 2 in Fig. 6).

Furthermore, under the control of the control unit (for example, the communication control unit 103 in Fig. 4) of the wireless communication module 15, the reception-side communication device 10Rx can receive, by using the first link or the second link (for example, Link 1, Link 2 in Fig. 6) included in the plurality of links (for example, Link 1, Link 2 in Fig. 6) set with the transmission-side communication device 10Tx, the data frame including the first data or the second data (for example, S/N 2 Fr 1, *S*/*N* 2 Fr 2 in Fig. 6) generated by dividing the transmission data (for example, the MSDU 2 in Fig. 5) on the basis of the use status of the first link, the data frame being transmitted from the transmission-side communication device 10Tx, restore the transmission data (for example, the MSDU 2 in Fig. 5) from the first data and the second data (For example, S/N 2 Fr 1, *S*/*N* 2 Fr 2 in Fig. 6) obtained from the data frame, and construct the restored transmission data as the reception data.

That is, in the present disclosure, in the case of performing the multi-link operation, the wireless communication device 10 can be configured to transmit data including fragmented data for each link by performing the fragment processing. In this way, by applying the fragment processing as the data length of each link in the multi-link operation, data can be efficiently transmitted on a plurality of links. That is, the utilization efficiency of the transmission path can be improved.

In the present disclosure, an MPDU subframe obtained by fragmenting an MSDU with any information length is included as an aggregated frame (A-MPDU), and the MPDU is fragmented with an information length that falls within a duration that can be transmitted in a target link (for example, Link 1), so that the end time alignment can be performed. In this way, by performing fragments having different information lengths of data for each link, it is possible to match end times, and it is possible to eliminate waste in the subsequent transmission without adding padding as in the conventional method.

In the present disclosure, in a case where a plurality of links becomes available, the start time alignment in a case where transmission is performed on a plurality of links can be performed by processing up to the amount of data that can be transmitted in a certain link as one fragment. In this way, when the transmission-side communication device 10Tx starts transmission in a plurality of links by the multi-link operation, the fragment processing is performed so that the start timings coincide with each other, and thus, it is possible to cause the reception-side communication device 10Rx to reliably grasp the data portion that can be collected before the state of the link changes.

In the present disclosure, the transmission-side communication device 10Tx transmits information that can specify the sequence of the fragmented data (MSDU) as the configuration of the MAC header, and the reception-side communication device 10Rx can grasp that the MSDU is transmitted by dividing the MSDU into a plurality of links when the sequence is specified from the information of the MAC header, and defragment and collect the fragmented data (MSDU) collected by other links.

In the present disclosure, the transmission-side communication device 10Tx performs the fragment processing according to the number of available links, so that the utilization efficiency of the transmission path is improved and the remaining time can be efficiently used for other transmission. Furthermore, unnecessary fragment processing can be suppressed to the minimum by determining the necessity of the fragment in individual links.

In the present disclosure, the transmission-side communication device 10Tx and the reception-side communication device 10Rx exchange information regarding performance of the fragment by the multi-link operation in advance, so that the fragment operation of the conventional method can be performed, and the fragment operation can be more efficiently performed between the devices corresponding to these functions. Furthermore, in a case where the transmission-side communication device 10Tx transmits data of a low-latency application, it is possible to perform data transmission with a shorter latency by fragmenting the data to an optimal information length for each link and transmitting the data by using a plurality of links as compared with a case where the data is transmitted by using one link.

### <Modifications>

### <Configuration Example of Computer>

The above-described series of processing can be executed by hardware or software. In a case where the series of processing is executed by software, a program included in the software is installed from a program recording medium to a computer incorporated in dedicated hardware, a general-purpose personal computer and the like.

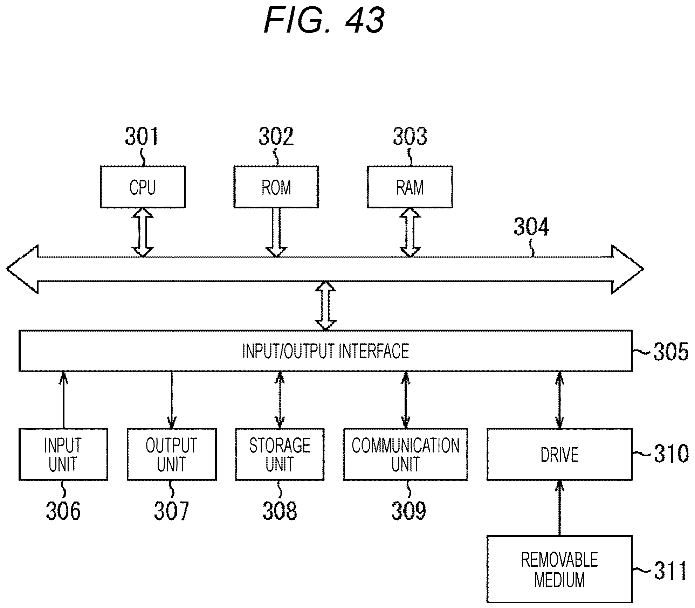

Fig. 43 is a block diagram illustrating a configuration example of hardware of a computer that executes the above-described series of processing by a program.

A central processing unit (CPU) 301, a read only memory (ROM) 302, and a random access memory (RAM) 303 are connected to each other by a bus 304.

An input/output interface 305 is further connected to the bus 304. The input/output interface 305 is connected to an input unit 306 including a keyboard, a mouse, and the like, and an output unit 307 including a display, a speaker, and the like. Furthermore, the input/output interface 305 is connected to a storage unit 308 including a hard disk, a non-volatile memory, and the like, a communication unit 309 including a network interface and the like, and a drive 310 that drives a removable medium 311.

In the computer configured as described above, for example, the CPU 301 loads a program stored in the storage unit 308 into the RAM 303 via the input/output interface 305 and the bus 304 and executes the program to perform the above-described series of processing.

The program executed by the CPU 301 is provided, for example, by being recorded on the removable medium 311 or via a wired or wireless transmission medium such as a local area network, the Internet, or digital broadcasting, and is installed on the storage unit 308.

Note that the program executed by the computer may be a program in which processing is performed in time series in the order described in the present specification, or may be a program in which processing is performed in parallel or at necessary timing such as when a call is made.

### <Application Examples>

The present technology can be applied to various products. For example, the wireless communication device 10 in Fig. 3 may be implemented as a mobile terminal such as a smartphone, a tablet personal computer (PC), a notebook PC, a portable game terminal, or a digital camera, a fixed terminal such as a television receiver, a printer, a digital scanner, or a network storage, or an in-vehicle terminal such as a car navigation device. Furthermore, the wireless communication device 10 may be implemented as a machine to machine communication (M2M) terminal such as a smart meter, a vending machine, a remote monitoring device, or a point of sale (POS) terminal. Moreover, the wireless communication device 10 may be a wireless communication module (for example, an integrated circuit module including one die) mounted on these terminals.

On the other hand, for example, the wireless communication device 10 in Fig. 3 may be implemented as a wireless LAN AP (wireless base station) having a router function or not having a router function. Furthermore, the wireless communication device 10 may be implemented as a mobile wireless LAN router. Moreover, the wireless communication device 10 may be a wireless communication module (for example, an integrated circuit module including one die) mounted on these devices.

### <Configuration Example of Smartphone>

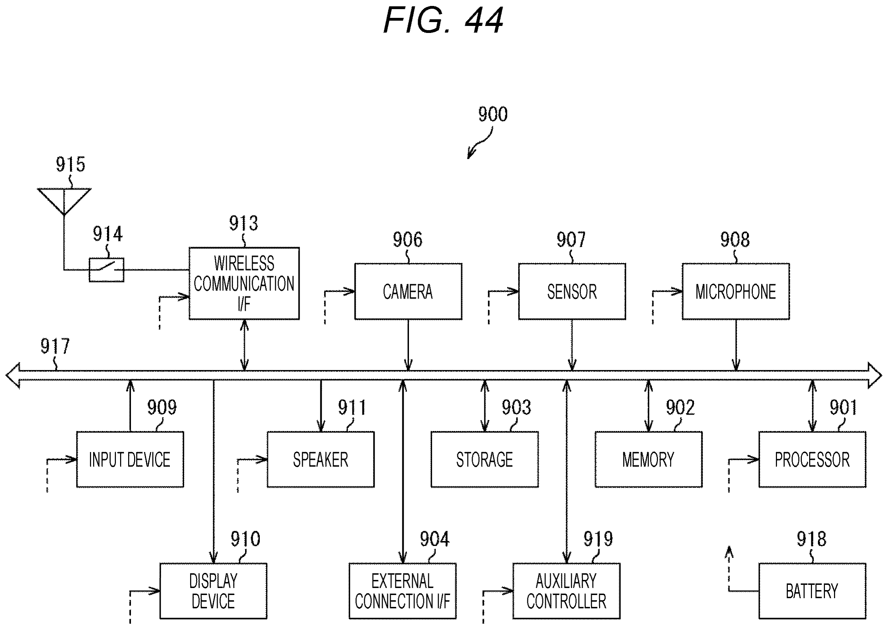

Fig. 44 is a block diagram illustrating a schematic configuration example of a smartphone to which the present technology is applied.

A smartphone 900 includes a processor 901, a memory 902, a storage 903, an external connection interface 904, a camera 906, a sensor 907, a microphone 908, an input device 909, and a display device 910. Furthermore, the smartphone 900 includes a speaker 911, a wireless communication interface 913, an antenna switch 914, an antenna 915, a bus 917, a battery 918, and an auxiliary controller 919.

The processor 901 may be, for example, a CPU or a system on chip (SoC), and restricts functions of an application layer and other layers of the smartphone 900.

The memory 902 includes a RAM and a ROM, and stores a program to be executed by the processor 901, and data.

The storage 903 may include a storage medium such as a semiconductor memory or a hard disk.

The external connection interface 904 is an interface for connecting an external device such as a memory card or a universal serial bus (USB) device to the smartphone 900.

The camera 906 includes an imaging element such as a charge coupled device (CCD) or a complementary metal oxide semiconductor (CMOS), for example, and generates a captured image.

The sensor 907 includes, for example, a sensor group including a positioning sensor, a gyro sensor, a geomagnetic sensor, an acceleration sensor, and the like.

The microphone 908 converts audio input to the smartphone 900 into an audio signal.

The input device 909 includes, for example, a touch sensor that detects a touch on a screen of the display device 910, a keypad, a keyboard, a button, and a switch, or the like, and receives an operation or information input from the user.

The display device 910 has a screen such as a liquid crystal display (LCD) or an organic light emitting diode (OLED) display, and converts the audio signal output from the smartphone 900 into audio.

The wireless communication interface 913 supports one or more of wireless LAN standards such as IEEE 802.11a, 11b, 11g, 11ac, and 11ad, and performs wireless communication.

The wireless communication interface 913 communicates with other devices via the wireless LAN AP in an infrastructure mode. Furthermore, the wireless communication interface 913 directly communicates with other devices in an ad hoc mode or a direct communication mode such as Wi-Fi Direct.

Note that, in Wi-Fi Direct, unlike the ad hoc mode, one of two terminals operates as an AP, but communication is directly performed between the terminals.

The wireless communication interface 913 typically includes a baseband processor, a radio frequency (RF) circuit, and a power amplifier, and the like. The wireless communication interface 913 may be a one-chip module in which a memory that stores a communication control program, a processor that executes the program, and related circuits are integrated.

In addition to the wireless LAN scheme, the wireless communication interface 913 may support other types of wireless communication schemes such as a short-range wireless communication scheme, a proximity wireless communication scheme, and a cellular communication scheme.

The antenna switch 914 switches a connection destination of the antenna 915 among a plurality of circuits (for example, circuits for different wireless communication schemes) included in the wireless communication interface 913.

The antenna 915 has a single or a plurality of antenna elements (for example, a plurality of antenna elements forming a multiple input multiple output (MIMO) antenna), and is used for transmission and reception of a wireless signal by the wireless communication interface 913.

Note that the smartphone 900 is not limited to the example in Fig. 44, and may include a plurality of antennas (for example, an antenna for the wireless LAN, an antenna of the proximity wireless communication scheme, and the like). In that case, the antenna switch 914 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 913, and the auxiliary controller 919 to each other.

The battery 918 supplies power to each block of the smartphone 900 illustrated in Fig. 44 via a feed line partially indicated by the broken line in the drawing. The auxiliary controller 919 causes operation of minimum necessary functions of the smartphone 900, for example, in a sleep mode.

In the smartphone 900 illustrated in Fig. 44, for example, the wireless communication module 15 in Fig. 3 may be implemented in the wireless communication interface 913. Furthermore, at least some of these functions may be implemented in the processor 901 or the auxiliary controller 919.

Note that the smartphone 900 may operate as a wireless AP (software AP) when the processor 901 executes an AP function at an application level. Furthermore, the wireless communication interface 913 may have the wireless AP function.

Moreover, the smartphone 900 may include a biometric authentication unit (fingerprint authentication, palm-shape authentication, voice authentication, blood vessel authentication, face authentication, iris authentication, and retina authentication). At that time, the wireless communication interface 913 in which the wireless communication module 15 in Fig. 3 is implemented is configured to receive power supply from the same battery 918 as at least one of the display device 910, the speaker 911, or the biometric authentication unit.

Furthermore, in the smartphone 900, information is displayed from at least one of the display device 910 or the speaker 911 on the basis of communication with an external device through the wireless communication interface 913. At that time, the information regarding the present technology may be output from at least one of the display device 910 or the speaker 911 as the information.

### <Configuration Example of In-vehicle Device>

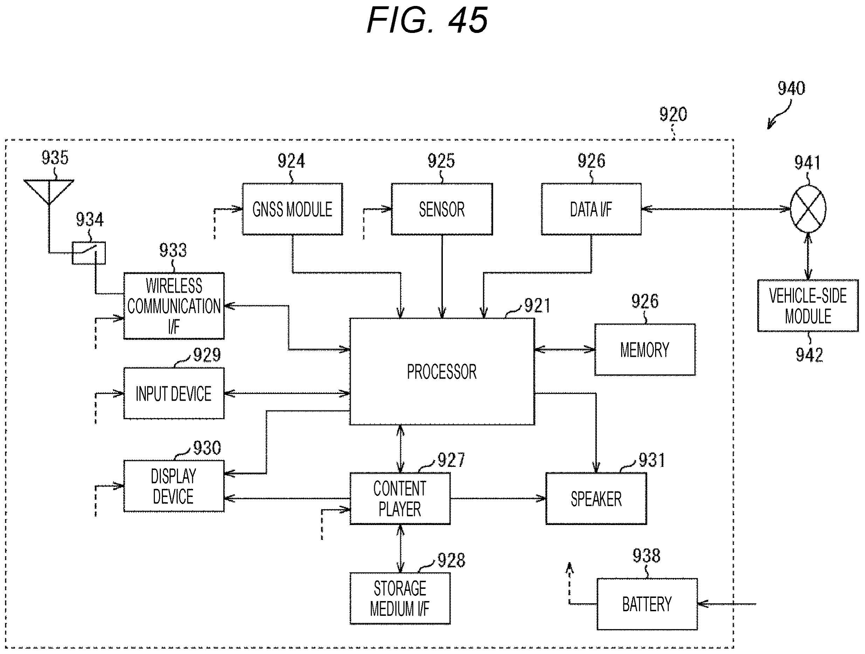

Fig. 45 is a block diagram illustrating a schematic configuration example of an in-vehicle device 920 to which the present technology is applied.

The in-vehicle device 920 includes a processor 921, a memory 922, a global navigation satellite system (GNSS) module 924, a sensor 925, a data interface 926, a content player 927, and a storage medium interface 928. Furthermore, the in-vehicle device 920 includes an input device 929, a display device 930, a speaker 931, a wireless communication interface 933, an antenna switch 934, an antenna 935, and a battery 938.

The processor 921 may be, for example, a CPU or an SoC, and controls a navigation function and other functions of the in-vehicle device 920. Furthermore, the processor 921 can also control a drive system of a vehicle, such as a brake, an accelerator, or a steering, on the basis of information obtained through communication based on the present technology.

The memory 922 includes a RAM and a ROM, and stores a program to be executed by the processor 921, and data.

The GNSS module 924 measures the location (for example, latitude, longitude, and altitude) of the in-vehicle device 920 by using a GNSS signal received from a GNSS satellite.

The sensor 925 includes, for example, a sensor group including a gyro sensor, a geomagnetic sensor, and an air pressure sensor.

The data interface 926 is connected to an in-vehicle network 941 via, for example, a terminal (not illustrated), and acquires data generated on the vehicle side, such as in-vehicle data.

The content player 927 reproduces contents stored in a storage medium (for example, a CD or a DVD) inserted into the storage medium interface 928.

The input device 929 includes, for example, a touch sensor that detects a touch on a screen of the display device 930, a button, a switch, or the like, and receives an operation or information input from the user.

The display device 930 has a screen such as an LCD or an OLED display, and displays an image of a navigation function or a content to be reproduced.

The speaker 931 outputs sound of the navigation function or the content to be reproduced.

Note that, in the in-vehicle device 920, the navigation function and the function of the content player 927 are optional. The navigation function and the content player 927 may be removed from the configuration of the in-vehicle device 920.

The wireless communication interface 933 supports one or more of wireless LAN standards such as IEEE 802.11a, 11b, 11g, 11n, 11ac, 11ad, 11ax, and 11be, and performs wireless communication. The wireless communication interface 933 communicates with other devices via the wireless LAN AP in the infrastructure mode. Furthermore, the wireless communication interface 933 directly communicates with other devices in an ad hoc mode or a direct communication mode such as Wi-Fi Direct.

The wireless communication interface 933 typically includes a baseband processor, an RF circuit, and a power amplifier. The wireless communication interface 933 may be a one-chip module in which a memory that stores a communication control program, a processor that executes the program, or related circuits are integrated. In addition to the wireless LAN scheme, the wireless communication interface 933 may support other types of wireless communication schemes such as a short-range wireless communication scheme, a proximity wireless communication scheme, and a cellular communication scheme.

The antenna switch 934 switches a connection destination of the antenna 935 among a plurality of circuits included in the wireless communication interface 933.

The antenna 935 has a single or a plurality of antenna elements, and is used for transmission and reception of a wireless signal by the wireless communication interface 933.

Note that the in-vehicle device 920 is not limited to the example in Fig. 45, and may include a plurality of the antennas 935. In that case, the antenna switch 934 may be omitted from the configuration of the in-vehicle device 920.

In the in-vehicle device 920 illustrated in Fig. 45, the battery 938 may supply power via a feed line partially illustrated by the broken line in the drawing, and for example, the wireless communication module 15 in Fig. 3 may be implemented in the wireless communication interface 933. Furthermore, at least some of these functions may be implemented in the processor 921.

Furthermore, the wireless communication interface 933 may operate as the wireless communication device 10 in Fig. 3 and provide wireless connection to a terminal possessed by a user in the vehicle.

Furthermore, the present technology may be implemented as an in-vehicle system (or vehicle) 940 including one or more blocks of the in-vehicle device 920 described above, the in-vehicle network 941, and a vehicle-side module 942. The vehicle-side module 942 generates vehicle-side data such as a vehicle speed, an engine speed, or failure information, and outputs the generated data to the in-vehicle network 941.

### <Configuration Example of Wireless AP>

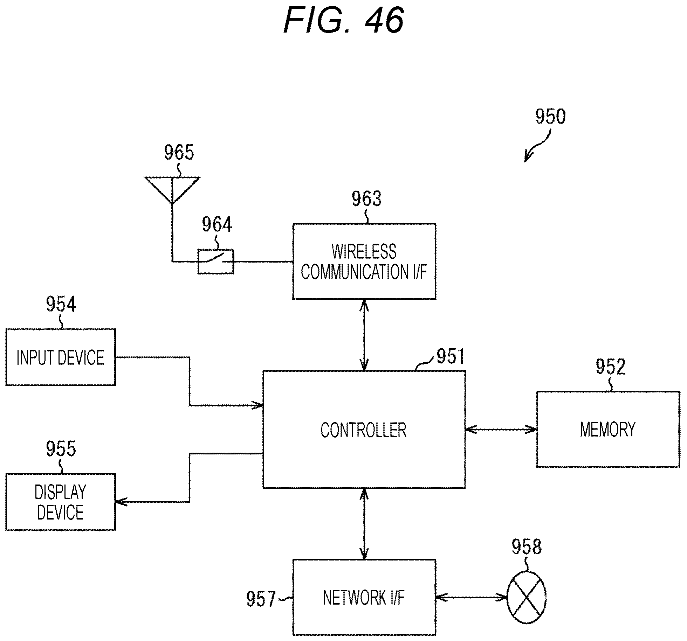

Fig. 46 is a block diagram illustrating a schematic configuration example of a wireless AP 950 to which the present technology is applied.

The wireless AP 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP), and operates various functions (for example, access restriction, routing, encryption, firewall, log management, and the like) of the Internet protocol (IP) layer and higher layer of the wireless AP 950.

The memory 952 includes a RAM and a ROM, and stores a program to be executed by the controller 951 and various control information (for example, a terminal list, a routing table, an encryption key, a security setting, a log, and the like).

The input device 954 includes, for example, a button, a switch, and the like, and receives an operation from the user.

The display device 955 includes an LED lamp and the like, and displays an operation status of the wireless AP 950.

The network interface 957 is a wired communication interface for connecting the wireless AP 950 to a wired communication network 958. The network interface 957 may have a plurality of connection terminals. The wired communication network 958 may be a LAN such as Ethernet (registered trademark), or may be a wide area network (WAN) .

The wireless communication interface 963 supports one or more of the wireless LAN standards such as IEEE 802.11a, 11b, 11g, 11n, 11ac, and 11ad, and provides wireless connection as an AP to a nearby terminal.

The wireless communication interface 963 typically includes a baseband processor, an RF circuit, a power amplifier, and the like.

The wireless communication interface 963 may be a one-chip module in which a memory that stores a communication control program, a processor that executes the program, or related circuits are integrated.

The antenna switch 964 switches a connection destination of the antenna 965 among a plurality of circuits included in the wireless communication interface 963, and the antenna 965 has a single or a plurality of antenna elements and is used for transmission and reception of a wireless signal by the wireless communication interface 963.

In the wireless AP950 illustrated in Fig. 46, for example, the wireless communication module 15 in Fig. 3 may also be implemented in the wireless communication interface 963. Furthermore, at least some of these functions may be implemented in the controller 951.

Note that, the above-described embodiments describe an example for embodying the present technology, and there is a correspondence relationship between the matters in the embodiments and the matters specifying the invention in claims. Similarly, there is a correspondence relationship between the matters specifying the invention in claims and the matters in the embodiments of the present technology having the same names. However, the present technology is not limited to the embodiments, and can be embodied by making various modifications to the embodiments without departing from the gist thereof.

Furthermore, the procedures described in the above-described embodiment may be considered as a method including a series of procedures and may be considered as a program for causing this computer to execute the series of procedures and a recording medium that stores the program.

As this recording medium, for example, a compact disc (CD), a MiniDisc (MD), a digital versatile disc (DVD), a memory card, a Blu-ray (registered trademark) Disc, and the like can be used.

Note that, in the present specification, a system means an assembly of a plurality of components (devices, modules (parts), and the like), and it does not matter whether or not all the components are located in the same housing. Therefore, a plurality of devices housed in separate housings and connected via a network and one device in which a plurality of modules is housed in one housing are both systems.

Furthermore, the effects described in the present specification are merely examples and not restrictive, and there may also be other effects.

An embodiment of the present technology is not limited to the embodiment described above, and various modifications can be made without departing from the scope of the present technology.

For example, the present technology may be configured as cloud computing in which one function is shared by a plurality of devices via a network and processed in cooperation.

Furthermore, each step described in the flowchart described above can be performed by one device or can be shared and performed by a plurality of devices.

Moreover, in a case where a plurality of processes is included in one step, the plurality of processes included in the one step can be executed by one device or can be shared and executed by a plurality of devices.

Furthermore, the present disclosure can have the following configurations.
(1) A wireless communication device including a control unit that performs control:
   to generate first data and second data by dividing transmission data on the basis of a use status of a first link included in a plurality of links set with another wireless communication device; and
   to transmit a data frame including the first data or the second data by using the first link or a second link different from the first link.
(2) The wireless communication device according to (1), in which
   the control unit determines an information length of the first data on the basis of a duration available in the first link.
(3) The wireless communication device according to (1), in which
   in a case where a first data frame including first transmission data is transmitted by using the first link, when a remaining time of transmission on the first link is shorter than a time indicated by an information length of second transmission data to be transmitted on the second link, the control unit divides the second transmission data into information lengths according to the remaining time, and
   when the second link becomes available, the control unit transmits a second data frame including first data generated by dividing the second transmission data by using the second link.
(4) The wireless communication device according to (3), in which
   after the transmission of the first data frame and the second data frame is completed, the control unit transmits another second data frame including second data generated by dividing the second transmission data by using the first link, and transmits a third data frame including third transmission data by using the second link.
(5) The wireless communication device according to (3), in which
   the control unit determines an information length for dividing the second transmission data such that the remaining time coincides with a transmission time of the second data frame, the second data frame including overhead information including at least header information and an error detection code.
(6) The wireless communication device according to (1), in which
   in a case where a first data frame including first transmission data is transmitted by using the first link, when a time from when the first link becomes available to when the second link becomes available is shorter than a time indicated by an information length of the first transmission data, the control unit divides the first transmission data into information lengths according to the time until the second link becomes available, and
   transmits a first data frame including first data generated by dividing the first transmission data by using the first link, and
   when the second link becomes available, the control unit transmits another first data frame including second data generated by dividing the first transmission data by using the first link, and transmits a second data frame including second transmission data by using the second link.
(7) The wireless communication device according to (6), in which
   when the second link becomes available, the control unit transmits the another first data frame including second data generated by dividing the first transmission data and third transmission data by using the first link.
(8) The wireless communication device according to (6), in which
   the control unit determines an information length for dividing the first transmission data such that a time until the second link becomes available coincides with a transmission time of the first data frame, the first data frame including overhead information including at least header information and an error detection code.
(9) The wireless communication device according to any one of (1) to (8), in which
   the control unit determines an information length for dividing the transmission data according to the number of available links.
(10) The wireless communication device according to any one of (1) to (8), in which
   the control unit exchanges in advance a parameter related to wireless communication by using the plurality of links and a parameter related to division of the transmission data with the another wireless communication device that receives the data frame.
(11) The wireless communication device according to any one of (1) to (8), in which
   in a case where a transmission opportunity of the transmission data is secured, the control unit transmits the data frame including the transmission data.
(12) A wireless communication method performed by a wireless communication device, the wireless communication method including:
   generating first data and second data by dividing transmission data on the basis of a use status of a first link included in a plurality of links set with another wireless communication device; and
   transmitting a data frame including the first data or the second data by using the first link or a second link different from the first link.
(13) A wireless communication device including a control unit that perform control:
   to receive, by using a first link included in a plurality of links set with another wireless communication device or a second link different from the first link, a data frame including first data or second data generated by dividing transmission data on the basis of a use status of the first link, the data frame being transmitted from the another wireless communication device; and
   to restore the transmission data from the first data and the second data obtained from the data frame and construct the restored transmission data as reception data.
(14) The wireless communication device according to (13), in which
   in the control unit,
   an information length of the first data is determined on the basis of a duration available in the first link.
(15) The wireless communication device according to (13), in which
   the control unit recognizes that the first data or the second data is included in the data frame on the basis of header information or information included in a delimiter included in the data frame.
(16) The wireless communication device according to (15), in which
   when a first data frame including first transmission data transmitted by using the first link is being received, the control unit receives a second data frame including first data generated by dividing second transmission data into an information length according to a remaining transmission time on the first link, the second data frame being transmitted by using the second link when the second link becomes available, and the control units receives another second data frame including second data generated by dividing the second transmission data, the another second data frame being transmitted by using the first link after the transmission of the first data frame and the second data frame is completed, and
   the control unit restores the second transmission data from first data included in the second data frame and second data included in the another second data frame.
(17) The wireless communication device according to (15), in which
   the control unit
   receives a first data frame including first data generated by dividing first transmission data into information lengths according to a time from when the first link becomes available to when the second link becomes available, the first data frame being transmitted by using the first link,
   receives another first data frame including second data generated by dividing the first transmission data, the another first data frame being transmitted by using the first link when the second link becomes available, receives a second data frame including second transmission data transmitted by using the second link, and
   restores the first transmission data from first data included in the first data frame and second data included in the another first data frame.
(18) The wireless communication device according to any one of (13) to (17), in which
   the control unit exchanges in advance a parameter related to wireless communication by using the plurality of links and a parameter related to division of the transmission data with the another wireless communication device that transmits the data frame.
(19) The wireless communication device according to any one of (13) to (17), in which
   in a case where a transmission opportunity of the transmission data is secured, the control unit receives the data frame including the transmission data.
(20) A wireless communication method performed by a wireless communication device, the wireless communication method including:
   receiving, by using a first link included in a plurality of links set with another wireless communication device or a second link different from the first link, a data frame including first data or second data generated by dividing transmission data on the basis of a use status of the first link, the data frame being transmitted from the another wireless communication device; and
   restoring the transmission data from the first data and the second data obtained from the data frame and construct the restored transmission data as reception data.

### REFERENCE SIGNS LIST

- 10: Wireless communication device
- 10Tx: Transmission-side communication device
- 10Rx: Reception-side communication device
- 11: Internet connection module
- 12: Information input module
- 13: Device control module
- 14: Information output module
- 15: Wireless communication module
- 100-1, 100-2: Multi-link block
- 101: Interface
- 102: Transmission buffer
- 103: Communication control unit
- 104: Frame construction unit
- 105: Multi-link management unit
- 106: Transmission signal processing unit
- 107: Fragment control unit
- 108: Antenna control unit
- 109: Access control unit
- 110: Transmission path use determination unit
- 111: Reception signal processing unit
- 112: Frame analysis unit
- 113: Reception buffer

## Claims

1. A wireless communication device comprising a control unit that performs control:
to generate first data and second data by dividing transmission data on a basis of a use status of a first link included in a plurality of links set with another wireless communication device; and
to transmit a data frame including the first data or the second data by using the first link or a second link different from the first link.

2. The wireless communication device according to claim 1, wherein
the control unit determines an information length of the first data on a basis of a duration available in the first link.

3. The wireless communication device according to claim 1, wherein
in a case where a first data frame including first transmission data is transmitted by using the first link, when a remaining time of transmission on the first link is shorter than a time indicated by an information length of second transmission data to be transmitted on the second link, the control unit divides the second transmission data into information lengths according to the remaining time, and
when the second link becomes available, the control unit transmits a second data frame including first data generated by dividing the second transmission data by using the second link.

4. The wireless communication device according to claim 3, wherein
after the transmission of the first data frame and the second data frame is completed, the control unit transmits another second data frame including second data generated by dividing the second transmission data by using the first link, and transmits a third data frame including third transmission data by using the second link.

5. The wireless communication device according to claim 3, wherein
the control unit determines an information length for dividing the second transmission data such that the remaining time coincides with a transmission time of the second data frame, the second data frame including overhead information including at least header information and an error detection code.

6. The wireless communication device according to claim 1, wherein
in a case where a first data frame including first transmission data is transmitted by using the first link, when a time from when the first link becomes available to when the second link becomes available is shorter than a time indicated by an information length of the first transmission data, the control unit divides the first transmission data into information lengths according to the time until the second link becomes available, and
transmits a first data frame including first data generated by dividing the first transmission data by using the first link, and
when the second link becomes available, the control unit transmits another first data frame including second data generated by dividing the first transmission data by using the first link, and transmits a second data frame including second transmission data by using the second link.

7. The wireless communication device according to claim 6, wherein
when the second link becomes available, the control unit transmits the another first data frame including second data generated by dividing the first transmission data and third transmission data by using the first link.

8. The wireless communication device according to claim 6, wherein
the control unit determines an information length for dividing the first transmission data such that a time until the second link becomes available coincides with a transmission time of the first data frame, the first data frame including overhead information including at least header information and an error detection code.

9. The wireless communication device according to claim 2, wherein
the control unit determines an information length for dividing the transmission data according to the number of available links.

10. The wireless communication device according to claim 1, wherein
the control unit exchanges in advance a parameter related to wireless communication by using the plurality of links and a parameter related to division of the transmission data with the another wireless communication device that receives the data frame.

11. The wireless communication device according to claim 1, wherein
in a case where a transmission opportunity of the transmission data is secured, the control unit transmits the data frame including the transmission data.

12. A wireless communication method performed by a wireless communication device, the wireless communication method comprising:
generating first data and second data by dividing transmission data on a basis of a use status of a first link included in a plurality of links set with another wireless communication device; and
transmitting a data frame including the first data or the second data by using the first link or a second link different from the first link.

13. A wireless communication device comprising a control unit that perform control:
to receive, by using a first link included in a plurality of links set with another wireless communication device or a second link different from the first link, a data frame including first data or second data generated by dividing transmission data on a basis of a use status of the first link, the data frame being transmitted from the another wireless communication device; and
to restore the transmission data from the first data and the second data obtained from the data frame and construct the restored transmission data as reception data.

14. The wireless communication device according to claim 13, wherein
in the control unit,
an information length of the first data is determined on a basis of a duration available in the first link.

15. The wireless communication device according to claim 13, wherein
the control unit recognizes that the first data or the second data is included in the data frame on a basis of header information or information included in a delimiter included in the data frame.

16. The wireless communication device according to claim 15, wherein
when a first data frame including first transmission data transmitted by using the first link is being received, the control unit receives a second data frame including first data generated by dividing second transmission data into an information length according to a remaining transmission time on the first link, the second data frame being transmitted by using the second link when the second link becomes available, and the control units receives another second data frame including second data generated by dividing the second transmission data, the another second data frame being transmitted by using the first link after the transmission of the first data frame and the second data frame is completed, and
the control unit restores the second transmission data from first data included in the second data frame and second data included in the another second data frame.

17. The wireless communication device according to claim 15, wherein
the control unit receives a first data frame including first data generated by dividing first transmission data into information lengths according to a time from when the first link becomes available to when the second link becomes available, the first data frame being transmitted by using the first link,
receives another first data frame including second data generated by dividing the first transmission data, the another first data frame being transmitted by using the first link when the second link becomes available, receives a second data frame including second transmission data transmitted by using the second link, and
restores the first transmission data from first data included in the first data frame and second data included in the another first data frame.

18. The wireless communication device according to claim 13, wherein
the control unit exchanges in advance a parameter related to wireless communication by using the plurality of links and a parameter related to division of the transmission data with the another wireless communication device that transmits the data frame.

19. The wireless communication device according to claim 13, wherein
in a case where a transmission opportunity of the transmission data is secured, the control unit receives the data frame including the transmission data.

20. A wireless communication method performed by a wireless communication device, the wireless communication method comprising:
receiving, by using a first link included in a plurality of links set with another wireless communication device or a second link different from the first link, a data frame including first data or second data generated by dividing transmission data on a basis of a use status of the first link, the data frame being transmitted from the another wireless communication device; and
restoring the transmission data from the first data and the second data obtained from the data frame and construct the restored transmission data as reception data.
